(19) Europäisches Patentamt / European Patent Office / Office européen des brevets

(11) **EP 3 330 335 B1**

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **17200004.4**

(22) Anmeldetag: **03.11.2017**

(51) Internationale Patentklassifikation (IPC):
**C09J 7/38** (2018.01)    **C09J 7/24** (2018.01)
**C09J 153/02** (2006.01)

(52) Gemeinsame Patentklassifikation (CPC):
(C-Sets verfügbar)
**C09J 7/24; C09J 7/387; C09J 153/02;**
C08L 2205/025; C09J 2301/302; C09J 2301/308;
C09J 2301/312; C09J 2301/408; C09J 2301/412;
C09J 2453/00; C09J 2453/006      (Forts.)

(54) **DURCH DEHNENDES VERSTRECKEN WIEDERABLÖSBARER HAFTKLEBESTREIFEN**

STRETCH RELEASABLE ADHESIVE TAPE

BANDE ADHÉSIVE DÉCOLLABLE PAR ÉTIREMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2016 DE 102016223852**

(43) Veröffentlichungstag der Anmeldung:
**06.06.2018 Patentblatt 2018/23**

(73) Patentinhaber: **tesa SE**
**22848 Norderstedt (DE)**

(72) Erfinder:
• **OSTERWINTER, Gregor**
  **22529 Hamburg (DE)**
• **VON DEHN, Beatrice**
  **22391 Hamburg (DE)**
• **DOLLASE, Thilo**
  **22397 Hamburg (DE)**
• **EGGER, Michael**
  **22297 Hamburg (DE)**

(74) Vertreter: **tesa SE**
**Hugo-Kirchberg-Straße 1**
**22848 Norderstedt (DE)**

(56) Entgegenhaltungen:
**EP-A2- 0 816 459    DE-A1-102015 206 076**

• **Anonymous: "VECTOR 4211A / VECTOR 4211N Styrene-Isoprene-Styrene (SIS) Block Copolymers", , 1. September 2014 (2014-09-01), Seiten 1-2, XP055463865, Gefunden im Internet: URL:http://tsrcdexco.com/uploads/pdfs/VECTOR_4211A_4211N_1.pdf [gefunden am 2018-03-29]**
• **Anonymous: "VECTOR 8508 Styrene-Butadiene-Styrene (SBS)", , 1. April 2014 (2014-04-01), Seiten 1-2, XP055463880, Gefunden im Internet: URL:http://tsrcdexco.com/uploads/pdfs/vector-8508.pdf [gefunden am 2018-03-29]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C09J 153/02, C08L 53/02**

**Beschreibung**

Die Erfindung betrifft reißfeste Selbstklebestreifen auf der Basis von Vinylblockcopolymeren, die zur Schaffung einer durch dehnende Verstreckung wieder lösbaren, schockresistenten Verbindung eingesetzt werden kann.

Elastisch oder plastisch hochdehnbare Selbstklebebänder, die sich durch dehnendes Verstrecken in der Verklebungsebene rückstands- und zerstörungsfrei wieder ablösen lassen, sind beispielsweise aus der US 4,024,312 A, DE 33 31 016 C2, WO 92/11332 A1, WO 92/11333 A1, DE 42 22 849 C1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als strippfähige Selbstklebebänder bezeichnet.

In diesem Zusammenhang beschreibt EP 0 816 459 einen Klebefolienstreifen für eine wieder lösbare Verklebung, der sich durch Ziehen in Richtung der Verklebungsebene ablösen lässt, mit einem Schichtaufbau aus einer elastischen Trägerschicht, die einseitig oder beidseitig mit einer Klebstoffschicht versehen ist, wobei sowohl die Trägerschicht als auch die Klebstoffschicht(en) als Basispolymere Styrolblockcopolymere enthalten, abgemischt mit Klebharzen, welche mit dem Elastomerblock der verwendeten Styrolblockcopolymere verträglich sind.

Eingesetzt werden solche strippfähigen Selbstklebebänder häufig in Form von ein- oder beidseitig haftklebrigen Klebfolienstreifen, die bevorzugt einen nicht haftklebrigen Anfassbereich aufweisen, von dem aus der Ablöseprozess eingeleitet wird. Besondere Anwendungen entsprechender Selbstklebebänder finden sich unter anderem in DE 42 33 872 C1, DE 195 11 288 C1, US 5,507,464 B1, US 5,672,402 B1 und WO 94/21157 A1.

Spezielle Ausführungsformen sind auch in der DE 44 28 587 C1, DE 44 31 914 C1, WO 97/07172 A1, DE 196 27 400 A1, WO 98/03601 A1 und DE 196 49 636 A1, DE 197 20 526 A1, DE 197 23 177 A1, DE 197 23 198 A1, DE 197 26 375 A1, DE 197 56 084 C1, DE 197 56 816 A1, DE 198 42 864 A1, DE 198 42 865 A1, WO 99/31193 A1, WO 99/37729 A1, WO 99/63018 A1, WO 00/12644 A1 und DE 199 38 693 A1 beschrieben.

Bevorzugte Einsatzgebiete vorgenannter strippfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Für den Einsatz im Wohn- und Bürobereich werden im Allgemeinen recht dicke Produkte von über 400 $\mu$m eingesetzt. Üblicherweise wird in diesen Anwendungen für die Ablösung eine Dehnung vorgenommen, die im Wesentlichen in Richtung der Verklebungsfläche erfolgt.

In der Consumer-Elektronik-Industrie - wie zum Beispiel bei der Herstellung von Mobiltelefonen, Digitalkameras oder Laptops - wird der Wunsch nach einer Möglichkeit, die einzelnen Bauteile nach der Nutzung bei der Entsorgung zu trennen, immer größer. Dann können einige Bauteile wiederverwendet oder aufbereitet werden. Oder es ist zumindest eine getrennte Entsorgung ermöglicht. Daher sind wiederlösbare Klebeverbindungen in dieser Industrie ebenfalls von großem Interesse. Insbesondere Klebebänder, die eine hohe Halteleistung besitzen und auf Wunsch leicht entfernt werden können, bilden hier eine sinnvolle Alternative zu Klebestreifen, die zum Ablösen erst vorbehandelt werden müssen, indem sie zum Beispiel erhitzt werden.

Im Bereich der Consumer-Elektronik sind Klebestreifen bevorzugt, die möglichst dünn sind, da die Endgeräte möglichst dünn sein und daher auch alle einzelnen Komponenten wenig Platz beanspruchen sollen. In kompakten Aufbauten ist ein Ablösen durch Dehnen in Verklebungsrichtung oft nicht möglich, und es muss unter größeren Winkeln (zum Beispiel mehr als 45° oder mehr als sogar 90°) verstreckt werden.

Beim Einsatz von sehr dünnen strippfähigen Klebestreifen, die ohne Träger auskommen, kommt es vermehrt zu Reißern (siehe DE 33 31 016 C2). Wenn die Klebestreifen reißen, ist ein Ablösen in der Regel allerdings nicht mehr möglich, weil der Rest des Klebestreifens in die Klebefuge zurückschnellt und somit kein Anfasser zur Verfügung steht.

Die geringe Dicke der betreffenden Klebeprodukte und die Notwendigkeit zur Ablösung unter größeren Winkeln stellen eine besondere Herausforderung an das Design von Selbstklebestreifen, die für diese Anwendungen geeignet sind.

Die WO 92/11332 A1 beschreibt einen durch Ziehen in der Verklebungsebene wiederablösbaren Klebfolienstreifen, für welchen als Träger eine hochverstreckbare, im Wesentlichen nicht rückstellende Folie genutzt werden kann. Als Klebemassen kommen ausschließlich UV-vernetzte Acrylatcopolymere zum Einsatz, die geschäumt sein können, mit denen aber insbesondere auf unpolaren Untergründen nicht die hohen Verklebungsfestigkeiten erreicht werden können und die weniger stark an Klebkraft während der Dehnung verlieren als dieses zum Beispiel bei Klebemassen auf Vinylaromatenblockcopolymerbasis der Fall ist. Es werden daher Ablösewinkel von höchstens 35° oder besser höchstens 30° empfohlen. Als Trägerdicke wird ein Bereich zwischen 10 $\mu$m und 250 $\mu$m angegeben. Die Träger können Polyolefin-basierend, Vinylpolymer-basierend oder basierend auf Olefin-Copolymer, EVA, ABS, Polyurethan, Polyacrylat oder ABA-Blockcopolymeren sein. Harzmodifizierte Träger auf Basis von Polyvinylaromat-Polydien-Blockcopolymeren sind nicht genannt.

Weitere Veröffentlichungen wie die WO 2010/141248 A1 beschreiben Systeme mit Polyisobutylenhaftklebemassen, die ebenfalls eine geringe Klebkraft aufweisen.

Ein strippfähiger Klebfolienstreifen mit einem geschäumten, nicht haftklebrigen Folienträger wird in WO 95/06691 A1 (Dicke des geschäumten Trägers von mindestens 760 $\mu$m), DE 196 49 727 A1 (Dicke von mindestens 175 $\mu$m), DE 196 49 728 A1 (Dicke von mindestens 150 $\mu$m; hier ist der Schaumträger vorgeschädigt, die Reißerbeständigkeit resultiert aus der Klebemasseschicht, so dass hier eine Schäumung kontraproduktiv wäre) und DE 196 49 729 A1 (Dicke von mindestens 175 $\mu$m) beschrieben. Durch den Schaumstoffzwischenträger ist eine geringe Dicke des Klebfolienstreifens von unter 200 $\mu$m kaum möglich.

Weiterhin sind mehrschichtige Klebestreifen bekannt, die durch Verstrecken ablösbar sind und die einen dehnbaren Träger enthalten, die auf Blockcopolymeren basieren.

US 4,024,312 A offenbart strippfähige Selbstklebestreifen enthaltend zumindest eine Haftklebeschicht basierend auf Klebharz modifiziertem Styrol-Blockcopolymer und einen dehnbaren Träger basierend auf Styrol-Blockcopolymer, das ebenfalls Klebharz modifiziert sein kann. Geschäumte Haftklebemasseschichten sind nicht genannt.

DE 197 08 366 A1 beschreibt mehrschichtige strippfähige Selbstklebestreifen, deren haftklebrige Außenschichten aus einer harzhaltigen Styrol-Blockcopolymer-Formulierung und die dehnbare Trägerschicht ebenfalls aus einer harzhaltigen Styrol-Blockcopolymer-Formulierung bestehen. Auf diese Weise soll verhindert werden, dass Harzmigration zwischen den verschiedenen Schichten stattfindet. Die Dicke der Einzelschichten kann zwischen 5 $\mu$m und 3000 $\mu$m liegen, die Dicke für die Mittelschicht in Dreischichtlaminaten zwischen 75 $\mu$m und 2000 $\mu$m und für Außenschichten zwischen 15 $\mu$m und 500 $\mu$m. Außenschichten können Hohlglaskugeln oder andere Füllstoffe enthalten. Geschäumte Außenschichten werden nicht genannt. Es werden sehr unterschiedliche Harztypen als einsetzbar genannt, neben aliphatischen, cycloaliphatischen und aromatisch modifizierten aliphatischen Klebharzen auch Kolophonium und seine Derivate, aromatische und phenolmodifizierte Klebharze. Spezifische Formulierungsbeispiele nennen hauptsächlich Kombinationen mit Kolophonium-Harzen oder solche mit Mineralölen als Weichmachern. Von ausgeprägt aromatischen Klebharzen und Kolophonium-Derivaten ist jedoch zu erwarten, dass sie auch mit Polyvinylaromaten verträglich sind und hier zu einer Schwächung der Kohäsion führen können. Solche Harze sind daher nicht im Sinne der vorliegenden Erfindung vorteilhaft, insbesondere bei sehr dünnen strippfähigen Selbstklebestreifen. Ebenso sind niederviskose Weichmacher wie Mineralöle nachteilig auf Grund ihrer hohen Migrationsneigung auch auf / in Verklebungsuntergründe.

Der Lehre der DE 198 20 858 A1 entsprechend kann ein strippfähiger Selbstklebestreifen einen ungeschäumten Träger enthalten. Diese sind aber vorgeschädigt und die Reißerbeständigkeit resultiert in diesem Fall aus den Haftklebemasseschichten. Hier ist daher eine Schäumung kontraproduktiv. Harzmodifikationen der Trägerschicht sind nicht genannt.

DE 101 29 608 A1 offenbart strippfähige Selbstklebestreifen, die eine Haftklebemasse basierend auf Acrylat-Blockcopolymeren enthalten. Diese Selbstklebestreifen können mehrschichtig ausgeführt sein, wobei die Trägerschicht aus einem harzmodifizierten Styrol-Blockcopolymer bestehen kann. Acrylat-Blockcopolymer-basierende Klebeschichten weisen typischerweise nicht die sehr hohen Klebkräfte auf, die mit harzmodifizierten Polystyrol-Polydien-Blockcopolymeren erreicht werden können.

Geschäumte Schichten sind in diesem Zusammenhang nicht vorgesehen, da dann nicht die in DE 101 29 608 geforderte Transparenz erreicht wird.

DE 102 52 088 A1 lehrt transparente mehrschichtige strippfähige Selbstklebestreifen, die in den Außenschichten Haftklebemassen basierend auf hydrierten Blockcopolymeren aufweisen. Explizit genannt in Beschreibung und Beispielen sind SEBS und SEPS. Haftklebemassen basierend auf solchen hydrierten Blockcopolymeren weisen typischerweise nicht die sehr hohen Klebkräfte auf, die mit harzmodifizierten Polystyrol-Polydien-Blockcopolymeren erreicht werden können. Schäumung ist aufgrund der geforderten Transparenz nicht vorgesehen.

DE 102 52 089 A1 beschreibt strippfähige Selbstklebestreifen mit mindestens einer Haftklebemasseschicht basierend auf Polyvinylaromat-Polydien-Blockcopolymeren, bei denen Vinylgruppen in den Polydien-Blöcken selektiv hydriert vorliegen. Diese Haftklebemasseschichten können auch als Außenschichten in mehrschichtigen Produkten genutzt werden, bei denen Styrol-Blockcopolymer-basierende Formulierungen als Trägermaterial genutzt werden. Geschäumte Außenschichten sind nicht vorgesehen.

DE 10 2012 223 670 A1 offenbart strippfähige Selbstklebestreifen mit einem dehnbaren Träger auf Basis eines Polyurethans. Geschäumte Haftklebemasseschichten sind nicht vorgesehen.

DE 10 2015 206 076 A1 lehrt strippfähige Selbstklebestreifen, die zumindest eine Schicht einer geschäumten Haftklebemasseschicht enthalten. Die Selbstklebestreifen können ein dehnbares Trägermaterial enthalten. Hierfür sind explizit Polymerfolien genannt zum Beispiel basierend auf Olefin-(Co)polymeren, Polyurethanen, Natur- und statistisch copolymerisierte Synthesekautschuke, Polyacrylat-Kautschuke, EVA sowie diverse Blockcopolymere. Polyurethane werden bevorzugt. Es ist nicht vorgesehen, Trägermaterialien mit Klebharzen zu modifizieren.

Geschäumte Haftklebemassesysteme sind seit längerem bekannt und im Stand der Technik beschrieben. Grundsätzlich lassen sich Polymerschäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkügelchen in die Werkstoffmatrix. Schäume, die auf letzterem Wege hergestellt wurden, werden als syntaktische Schäume bezeichnet.

Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit.

Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren. Darüber hinaus ergibt sich bei Glashohlkugeln oft die Schwierigkeit der Zerstörung bei der Einarbeitung.

Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für selbstklebende Schäume kombiniert werden.

In der EP 0 257 984 A1 werden Klebebänder offenbart, die zumindest einseitig eine geschäumte Klebebeschichtung aufweisen. In dieser Klebebeschichtung sind Polymerkügelchen enthalten, die ihrerseits eine Flüssigkeit aus Kohlenwasserstoffen enthalten und bei erhöhten Temperaturen expandieren. Die Gerüstpolymere der Haftklebemassen können aus Kautschuken oder Polyacrylaten bestehen. Die Mikroballons werden hier entweder vor oder nach der Polymerisation zugesetzt. Die Mikroballons enthaltenden Haftklebemassen werden aus Lösemittel verarbeitet und zu Klebebändern ausgeformt. Der Schritt der Schäumung erfolgt dabei konsequent nach der Beschichtung. So werden mikroraue Oberflächen erhalten. Daraus resultieren Eigenschaften wie insbesondere Repositionierbarkeit. Der Effekt der besseren Repositionierbarkeit durch mikroraue Oberflächen von mit Mikroballon geschäumten Haftklebemassen wird auch in weiteren Schriften wie DE 35 37 433 A1 oder WO 95/31225 A1 beschrieben.

Die mikroraue Oberfläche wird verwendet, um eine blasenfreie Verklebung zu erzeugen. Diese Verwendung offenbaren auch die EP 0 693 097 A1 und die WO 98/18878 A1. Mit Mikroballons geschäumte Haftklebemassen sind auch aus den Schriften US 4,885,170 A und EP 1 102 809 B bekannt, hier werden sie aber als Füllstoff für Klebebänder zur permanenten Verklebung eingesetzt, die nicht wieder ablösbar sind. Aus dem Stand der Technik (DE 10 2015 206 076 A1) sind weitere Selbstklebemassen bekannt, die geschäumt sind und die sich durch Verstrecken aus einer Verklebung lösen lassen.

Zu den Geräten in der Consumer-Elektronik-Industrie zählen elektronische, optische und feinmechanische Geräte im Sinne dieser Anmeldung insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)); einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge-, Mess-, Signal-, Kontroll-, Rettungs- und Unterrichtsapparate und -instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielsweise Fernseher und dergleichen
- Akustische Aufzeichnungs-, Verarbeitungs-, -übertragungs- und -wiedergabegeräte, wie beispielsweise Rundfunkgeräte und dergleichen
- Computer, Rechengeräte und Datenverarbeitungsgeräte, mathematische Geräte und Instrumente, Computerzubehör, Bürogeräte -wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielweise Telefone, Anrufbeantworter
- Chemische und physikalische Messgeräte, Steuergeräte und Instrumente, wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärker Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden.

Die Erfindung bezieht sich dementsprechend besonders bevorzugt auf Mobilgeräte, da die erfindungsgemäßen Selbstklebeprodukte hier aufgrund ihrer unerwartet guten Eigenschaften (sehr hohe Schockresistenz) einen besonderen Nutzen hat. Nachfolgend sind einige portable Geräte aufgeführt, ohne sich durch die konkret genannten Vertreter in dieser Liste bezüglich dem Gegenstand der Erfindung unnötig beschränken zu wollen.

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für zum Beispiel CD, DVD, Blueray, Kassetten, USB, MP3, Kopfhörer
- Schnurlose Telefone, Mobiltelefone, Smartphones, Funksprechgeräte, Freisprechgeräte, Personenrufgeräte (Pager, Pieper)
- Mobile Defibrillatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Für diese Geräte sind insbesondere Selbstklebebänder gefordert, die eine hohe Halteleistung besitzen und die auf Wunsch leicht entfernt werden können. Des Weiteren ist wichtig, dass die Klebebänder in ihrer Halteleistung nicht versagen, wenn das elektronische Gerät, zum Beispiel ein Handy, fallengelassen wird und auf den Untergrund aufprallt. Der Selbstklebestreifen muss also eine sehr hohe Schockresistenz aufweisen.

Aufgabe der Erfindung ist es entsprechend, einen durch Dehnung in Richtung der Verklebungsebene, aber auch insbesondere in ungünstiger Ablösekonfiguration weitestgehend rückstands- und zerstörungsfrei wiederablösbaren Haftklebestreifen zu finden, der eine besonders hohe Schockresistenz aufweist bei gleichzeitig guter Verklebungsfestigkeit. Der Haftklebestreifen soll möglichst dünn sein (abgesehen von temporären Trennfolien oder Trennlinern), um dem Trend nach immer kleiner und leichter dimensionierten Mobilgeräten Rechnung zu tragen.

Die Aufgabe wird mit einem gattungsgemäßen Haftklebestreifen, im Folgenden auch Selbstklebestreifen genannt, erfindungsgemäß gelöst, wie er im Hauptanspruch niedergelegt ist. Gegenstand der Unteransprüche sind dabei vorteilhafte Weiterbildungen des Haftklebestreifens.

Demgemäß betrifft die Erfindung einen Haftklebestreifen, der sich durch dehnendes Verstrecken ablösen lässt, enthaltend eine oder mehrere Haftklebemassenschichten, die allesamt aus einer Haftklebemasse bestehen, die insbesondere mit Mikroballons geschäumt ist, und aus einer oder mehreren dehnbaren Trägerschichten.

Der Selbstklebestreifen besteht insbesondere ausschließlich aus den genannten Haftklebemassenschichten und Trägerschichten, wobei die eine äußere obere und eine äußere untere Fläche des Selbstklebestreifens von der oder den genannten Haftklebemassenschichten gebildet werden.

Das heißt, der Selbstklebestreifen weist eine obere äußere und eine untere äußere Fläche auf, wobei weder auf der oberen äußeren noch auf der unteren äußeren Fläche eine oder mehrere weitere Schichten, insbesondere keine anderen Haftklebemassenschichten, vorhanden sind, die Bestandteil des Selbstklebestreifens sind. Der Selbstklebestreifen kann bis zur Verwendung ein- oder beidseitig mit einem Liner (Trennpapier oder Trennfolie) eingedeckt sein.

Erfindungswesentlich ist, dass die äußeren der Verklebung zugänglichen Flächen des Selbstklebstreifens von der erfindungsgemäßen geschäumten Haftklebemasse gebildet werden. Durch den geschäumten Charakter werden die erfindungsgemäß festgestellten Vorteile wie die hohe Schockresistenz verwirklicht.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Haftklebemassen miteinander in Kontakt kommen, oder um bei einseitig klebenden Klebebändern eine Verklebung der Haftklebemasse auf dem Träger zu verhindern, werden die Klebebänder vor dem Wickeln auf ein Abdeckmaterial (auch als Trennmaterial bezeichnet) aufgebracht, das zusammen mit dem Klebeband aufgewickelt wird. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt.

Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Die die zumindest eine Klebemassenschicht bildende geschäumte Haftklebemasse A des Haftklebestreifens enthält einen Elastomerteil (a1) auf Basis zumindest einer Sorte eines Polyvinylaromaten-Polydien-Blockcopolymers und einen Klebharzteil (a2) mit zumindest einer Sorte eines Klebharzes, sowie optional einen Weichharzteil (a3) und optional weitere Additive (a4). Durch die in der folgenden Beschreibung dargelegten Ausführungen werden die geforderten Verklebungseigenschaften auf verschiedenen Substraten verwirklicht.

In dem Selbstklebestreifen ist zudem zumindest ein Träger B vorhanden. Der zumindest eine Träger B enthält einen Elastomerteil (b1) auf Basis zumindest einer Sorte eines Polyvinylaromaten-Polydien-Blockcopolymers und einen Klebharzteil (b2) mit zumindest einer Sorte eines Klebharzes sowie optional einen Weichharzteil (b3) und optional weitere Additive (b4).

Gemäß einer bevorzugten Ausführungsform der Erfindung ist der Träger vorzugsweise mittig in der aus der Haftklebemasse A gebildeten Klebemassenschicht angeordnet.

In einer alternativen, dreischichtigen Variante sind oberhalb und unterhalb des Trägers B aus der Haftklebemasse A gebildete Haftklebemasseschichten angeordnet, weiter vorzugsweise sind die beiden Haftklebemassenschichten identisch.

Erfindungsgemäße Selbstklebestreifen, die sich durch dehnendes Verstrecken im Wesentlichen rückstands- und zerstörungsfrei wieder ablösen lassen, können aus einer oder mehreren Klebemassenschichten, die allesamt aus einer Haftklebemasse A bestehen, die mit Mikroballons geschäumt sind, und aus einer oder mehreren Trägerschichten B bestehen, wobei die eine äußere obere und die eine äußere untere Fläche des Selbstklebestreifens von der oder den aus der Haftklebemasse A bestehenden Klebemassenschichten gebildet werden.

Die zumindest eine **Klebemasseschicht A** besteht aus einem Elastomerteil (a1), einem Klebharzteil (a2), optional einem Weichharzteil (a3) und optional weiteren Additiven (a4), wobei

- der **Elastomerteil (a1)** zu mindestens 90 Gew.-% aus Polyvinylaromaten-Polydien-Blockcopolymeren, insbesondere Polyvinylaromaten-Polybutadien-Blockcopolymeren besteht, der Gehalt an Polyvinylaromaten an den Polyvinylaromat-Polydien-Blockcopolymeren bei mindestens 12 Gew.-% und höchstens 35 Gew.-%, bevorzugt bei mindestens 20 Gew.-% und höchstens 32 Gew.-% liegt und der Anteil des Elastomerteils (a1) bezogen auf die Gesamtklebemasse A bei mindestens 40 Gew.-% und höchstens 55 Gew.-%, bevorzugt bei mindestens 45 Gew.-% liegt,

- der **Klebharzteil (a2)** zu mindestens 90 Gew.-%, bevorzugt zu mindestens 95 Gew.-% aus mit den Polydien-Blöcken verträglichen und mit den Polyvinylaromaten-Blöcken unverträglichen Kohlenwasserstoffharzen, die ausgewählt sind aus der Gruppe bestehend aus hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5/C_9$- oder $C_9$-Monomerströmen, Polyterpenharze auf Basis von $\alpha$-Pinen und/oder ß-Pinen und/oder $\delta$-Limonen sowie Mischungen hiervon, besteht und der Anteil des Klebharzteils (a2) bezogen auf die Gesamtklebemasse A bei mindestens 40 Gew.-% und höchstens 60 Gew.-% liegt,

- der **Weichharzteil (a3)** bezogen auf die Gesamtklebemasse bei 0 Gew.-% bis höchstens 5 Gew.-% liegt,

- der Anteil an Mikroballons bezogen auf die Gesamtklebemasse bei mindestens 0,5 Gew.-% und höchstens 2,5 Gew.-%, bevorzugt bei mindestens 1,0 Gew.-% und höchstens 2,0 Gew.-% liegt und

- die Dicke der zumindest einen geschäumten Haftklebemasseschicht A bei mindestens 20 $\mu$m und höchstens 75 $\mu$m, bevorzugt bei mindestens 25 $\mu$m und höchstens 65 $\mu$m liegt.

Wenn die Summe der Gewichtsanteile aus Elastomerteil (a1), aus Klebharzteil (a2), aus Weichharzteil (a3) und aus Mikroballons nicht 100 Gew.-% ergibt, wird der verbleibende Rest an 100 Gew.-% durch die Additive (a4) gebildet.

Die zumindest eine **Trägerschicht B** besteht aus einem Elastomerteil (b1), einem Klebharzteil (b2), optional einem Weichharzteil (b3) und optional weiteren Additiven (b4), wobei

- der **Elastomerteil (b1)** zu mindestens 90 Gew.-% aus Polyvinylaromaten-Polydien-Blockcopolymeren, insbesondere Polyvinylaromaten-Polybutadien-Blockcopolymeren und/oder Polyvinylaromaten-Polyisopren-Blockcopolymeren besteht, der Gehalt an Polyvinylaromaten an den Polyvinylaromat-Polydien-Blockcopolymeren bei mindestens 20 Gew.-% und höchstens 45 Gew.-%, bevorzugt bei mindestens 25 Gew.-% und höchstens 35 Gew.-% liegt, innerhalb des Elastomerteils der Anteil an zumindest einem Triblockcopolymer oder Multiblockcopolymer (linear oder radial) bei mindestens 80 Gew.-%, bevorzugt bei mindestens 90 Gew.-%, liegt, wobei die Molmasse des Triblockcopolymers oder Multiblockcopolymers (linear oder radial) (Peakmolmasse nach GPC gemäß Test II) bei mindestens 85 000 g/mol liegt, der Anteil an Diblockcopolymeren bei weniger als 20 Gew.-%, insbesondere bei höchstens 18 Gew.-%, bevorzugt bei höchstens 10 Gew.-%, sehr bevorzugt bei 0 Gew.-% liegt und der Anteil an Elastomeren (b1) bezogen auf die Formulierung der Trägerschicht B bei mindestens 40 Gew.-% und höchstens 60 Gew.-%, bevorzugt bei mindestens 45 Gew.-% und höchstens 55 Gew.-% liegt,

- der **Klebharzteil (b2)** zu mindestens 90 Gew.-%, bevorzugt zu mindestens 95 Gew.-% aus mit den Polydien-Blöcken verträglichen und mit den Polyvinylaromaten-Blöcken unverträglichen Kohlenwasserstoffharzen, die ausgewählt sind aus der Gruppe bestehend aus hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5/C_9$- oder $C_9$-Monomerströmen, Polyterpenharze auf Basis von $\alpha$-Pinen und/oder ß-Pinen und/oder $\delta$-Limonen sowie Mischungen hiervon, besteht und der Anteil des Klebharzteils (b2) bezogen auf die Gesamtformulierung der Trägerschicht B bei mindestens 40 Gew.-% und höchstens 60 Gew.-% liegt,

- der **Weichharzanteil (b3)** bezogen auf die Gesamtformulierung der Trägerschicht bei 0 Gew.-% bis höchstens 5 Gew.-% liegt,

- die Dicke der Trägerschicht B bei mindestens 70 $\mu$m und höchstens 150 $\mu$m, bevorzugt bei mindestens 80 $\mu$m und höchstens 120 $\mu$m liegt und

- die Trägerschicht B im Wesentlichen ungeschäumt vorliegt.

Wenn die Summe der Gewichtsanteile aus Elastomerteil (b1), aus Klebharzteil (b2) und aus Weichharzteil (b3) nicht 100 Gew.-%, wird der verbleibende Rest an 100 Gew.-% durch die Additive (b4) gebildet.

Erfindungsgemäße Selbstklebestreifen weisen vorzugsweise eine Gesamtdicke (ohne temporäre Trennliner oder Trennfolien) von höchstens 250 $\mu$m, bevorzugt von weniger als 175 $\mu$m auf. Einseitig klebende Selbstklebestreifen (eine Klebemasseschicht, eine Trägerschicht) sind mindestens 90 $\mu$m, typischerweise mindestens 100 $\mu$m dick.

Bei der dreischichtigen Variante (zwei Klebemasseschichten, eine Trägerschicht) beträgt die Mindestdicke 110 $\mu$m.

Es sind dickere Aufbauten mit dickeren beziehungsweise weiteren Schichten möglich.

Die maximale Dehnbarkeit der Trägerschicht B ist sehr bevorzugt mindestens so hoch wie die maximale Dehnbarkeit der geschäumten Klebemasseschicht(en).

Die Klebharzkombination (a2) und die Klebharzkombination (b2) werden vom Typ her für die Haftklebemasseschicht A und die Trägerschicht B vorzugsweise gleich gewählt.

Ebenso wird, sofern diese Komponente zum Einsatz kommt, die Weichharzkombination (a3) und die Weichharzkombination (b3) vom Typ her für die Haftklebemasseschicht A und die Trägerschicht B gemäß einer bevorzugten Ausführungsform gleich gewählt. Ebenso wird, sofern diese Komponente zum Einsatz kommt, ein Additiv (a4) und ein Additiv (b4) vom Typ her für die Haftklebemasseschicht A und die Trägerschicht B gemäß einer bevorzugten Ausführungsform gleich gewählt. Auf diese Weise wird etwaiges Migrationspotenzial von Bestandteilen (a2), (b2), (a3), (b3), (a4) und/oder (b4) minimiert oder sogar gänzlich unterdrückt.

Unter "Typ" ist dabei die für den betreffenden Bestandteil (zum Beispiel Klebharz) zu Grunde liegende Chemie und/oder Aufbau gemeint. Bestandteile vom gleichen Typ weisen die gleiche Chemie und/oder Struktur (zum Beispiel linear oder verzweigt) und/oder Molmasse und/oder Molmassenverteilung auf. Bevorzugt sind betreffende Bestandteile im Hinblick auf zwei Kriterien gleich, sehr bevorzugt im Hinblick auf drei, besonders bevorzugt im Hinblick auf alle vier.

Dass Selbstklebestreifen des geschilderten Aufbaus die gestellten Anforderungen sehr gut erfüllen, ist überraschend. Und zwar überraschend insbesondere im Hinblick auf das gute Ablöseverhalten durch dehnendes Verstrecken auch unter schwierigen Ablösebedingungen. Durch Nutzung eines Klebharzes im Trägermaterial sinkt nämlich die Zugfestigkeit des Trägers. Die Zugfestigkeit des Trägers kann aber als entscheidend für erfolgreiches Ablöseverhalten unter dehnendem Verstrecken ("reißerfreies Ablösen") angenommen werden. Man kann erwarten, dass die Zugfestigkeit des Trägers umso wichtiger für den Ablöseprozess ist, wenn die Haftklebemasseschicht(en) geschäumt vorliegen und selbst weniger effektiv zur Zugfestigkeit des Selbstklebestreifens beitragen.

Damit einschlägig bekannte strippfähige Selbstklebestreifen leicht und rückstandsfrei wieder abgelöst werden können, müssen sie bestimmte klebtechnische Eigenschaften besitzen:

Beim Verstrecken muss die Klebrigkeit der Klebfolienstreifen deutlich sinken. Je niedriger die Klebleistung im verstreckten Zustand ist, umso weniger stark wird der Untergrund beim Ablösen beschädigt oder umso weniger ausgeprägt besteht die Gefahr, dass Rückstände auf dem Verklebungssubstrat zurückbleiben.

Besonders deutlich ist diese Eigenschaft bei Klebemassen auf Basis von Vinylaromatenblockcopolymeren zu erkennen, bei denen in der Nähe der Streckgrenze die Klebrigkeit auf unter 10 % sinkt.

Damit strippfähige Selbstklebebänder leicht und rückstandsfrei wieder abgelöst werden können, müssen sie neben den oben beschriebenen klebtechnischen auch einige bestimmte mechanische Eigenschaften besitzen.

Besonders vorteilhaft ist das Verhältnis der Reißkraft und der Strippkraft größer als zwei, bevorzugt größer als drei. Dabei ist die Strippkraft diejenige Kraft, die aufgewendet werden muss, um einen Klebestreifen aus einer Klebfuge durch paralleles Ziehen in Richtung der Verklebungsebene wieder zu lösen. Diese Strippkraft setzt sich aus der Kraft, die wie oben beschrieben für das Ablösen des Klebebandes von den Verklebungsuntergründen nötig ist, und der Kraft, die zur Verformung des Klebebandes aufgewendet werden muss, zusammen. Die zur Verformung des Klebebandes erforderliche Kraft ist abhängig von der Dicke des Klebfolienstreifens.

Die zum Ablösen benötigte Kraft ist dagegen in dem betrachteten Dickenbereich des Klebfolienstreifens unabhängig von der Dicke der Klebestreifen.

*1.) Geschäumte Haftklebemasse A*

Die Haftklebemassenschicht A enthält eine Haftklebemasse, die auf Basis zumindest eines Polyvinylaromat-Polydien-Blockcopolymeren (a1) und zumindest eines Klebharzes (a2) aufgebaut ist.

Bei dem Elastomerteil (a1) handelt es sich um mindestens ein Polyvinylaromat-Polydien-Blockcopolymer in Form eines Blockcopolymers mit einem Aufbau A-B, A-B-A, $(A-B)_n$, $(AB)_nX$ oder $(A-B-A)_nX$, worin

- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen oder für im Polydien-Block ein teilhydriertes Derivat eines solchen Polymers;
- X für den Rest eines Kopplungsreagenzes oder Initiators und
- n für eine ganze Zahl $\geq 2$ stehen.

Insbesondere sind alle Synthesekautschuke der erfindungsgemäßen Haftklebemasse Blockcopolymere mit einem Aufbau wie vorstehend dargelegt. Die erfindungsgemäße Haftklebemasse kann somit auch Gemische verschiedener Blockcopolymere mit einem Aufbau wie vorstehend enthalten.

Geeignete Blockcopolymere (Vinylaromatenblockcopolymere) umfassen also einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Haftklebemasse ein Blockcopolymer mit einem Aufbau A-B, A-B-A, $(A-B)_2X$, $(A-B)_3X$ oder $(A-B)_4X$, wobei für A, B und X die vorstehenden Bedeutungen gelten. Ganz besonders bevorzugt sind alle Synthesekautschuke der erfindungsgemäßen Haftklebemasse Blockcopolymere mit einem Aufbau A-B, A-B-A, $(A-B)_2X$, $(A-B)_3X$ oder $(AB)_4X$, wobei für A, B und X die vorstehenden Bedeutungen gelten. Insbesondere ist der Synthesekautschuk der erfindungsgemäßen Haftklebemasse ein Gemisch aus Blockcopolymeren mit einem Aufbau A-B, A-B-A, $(A-B)_2X$, $(A-B)_3X$ oder $(A-B)_4X$, das bevorzugt mindestens Diblockcopolymere A-B und/oder Triblockcopolymere A-B-A oder $(A-B)_2X$ enthält.

Weiterhin vorteilhaft ist ein Gemisch aus Diblock- und Triblockcopolymeren und $(A-B)_n$- oder $(A-B)_nX$-Blockcopolymeren mit n größer gleich 3.

Weiterhin vorteilhaft ist ein Gemisch aus Diblockcopolymeren und radialen Multiblockcopolymeren $(A-B)_n$ oder $(A-B)_n$-X mit n größer gleich 3.

Als Haftklebemassen finden bevorzugt solche auf Basis von Blockcopolymeren enthaltend Polymerblöcke überwiegend gebildet von Vinylaromaten (A-Blöcke), bevorzugt Styrol, und solche überwiegend gebildet durch Polymerisation von 1,3-Dienen (B-Blöcke) wie zum Beispiel Butadien und Isopren oder einem Copolymer aus diesen, insbesondere Butadien, Anwendung. Dabei können die Produkte auch teilweise im Dien-Block hydriert sein. Im Hinblick auf teilhydrierte Derivate sind insbesondere solche Blockcopolymere geeignet, bei denen vor allem etwaige Vinyl-Gruppen, also Wiederholeinheiten, die in der Seitenkette ungesättigt vorliegen wie 1,2-Polybutadien, 1,2-Polyisopren oder 3,4-Polyisopren, hydriert vorliegen.

Vorzugsweise besitzen die Blockcopolymere der Haftklebemassen Polystyrolendblöcke.

Die aus den A- und B-Blöcken resultierenden Blockcopolymere können gleiche oder unterschiedliche B-Blöcke enthalten. Die Blockcopolymere können lineare A-B-A-Strukturen aufweisen. Einsetzbar sind ebenfalls Blockcopolymere von radialer Gestalt sowie sternförmige und lineare Multiblockcopolymere. Als weitere Komponenten können A-B-Zweiblockcopolymere vorhanden sein. Sämtliche der vorgenannten Polymere können allein oder im Gemisch miteinander genutzt werden.

Anstelle der bevorzugten Polystyrolblöcke können als Vinylaromaten auch Polymerblöcke auf Basis anderer aromatenhaltiger Homo- und Copolymere (bevorzugt $C_8$- bis $C_{12}$-Aromaten) mit Glasübergangstemperaturen von größer 75 °C genutzt werden wie zum Beispiel $\alpha$-methylstyrolhaltige Aromatenblöcke. Weiterhin können auch gleiche oder unterschiedliche A-Blöcke enthalten sein.

Vinylaromaten zum Aufbau des Blocks A umfassen bevorzugt Styrol, $\alpha$-Methylstyrol und/oder andere Styrol-Derivate. Der Block A kann somit als Homo- oder Copolymer vorliegen. Besonders bevorzugt ist der Block A ein Polystyrol.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teilhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

A-Blöcke werden im Zusammenhang mit dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 25 °C insbesondere mindestens 50 °C und für B-Blöcke höchstens 25 °C insbesondere höchstens -25 °C) wieder.

In einer bevorzugten Ausgestaltung beträgt der Anteil der Vinylaromatenblockcopolymere, insbesondere Styrolblockcopolymere in Summe bezogen auf die gesamte Haftklebemasse mindestens 40 Gew.-%, vorzugsweise mindestens 45 Gew.-%.

Ein zu geringer Anteil an Vinylaromatenblockcopolymeren hat zur Folge, dass die Kohäsion der Haftklebemasse relativ niedrig ist, so dass sie beim Strippen leichter reißt. Zudem steigt die Glasübergangstemperatur der Elastomerphase an, so dass die Schockresistenz reduziert wird. Zudem steigt die Gefahr, dass Rückstände beim Ablösen auf dem Verklebungssubstrat verbleiben.

Der maximale Anteil der Vinylaromatenblockcopolymere, insbesondere Styrolblockcopolymere in Summe bezogen auf die gesamte Haftklebemasse beträgt maximal 55 Gew.-%. Ein zu hoher Anteil an Vinylaromatenblockcopolymere hat wiederum zur Folge, dass die Haftklebemasse nicht mehr ausreichend haftklebrig ist.

Dementsprechend beträgt der Anteil der Vinylaromatenblockcopolymere, insbesondere Styrolblockcopolymere in Summe bezogen auf die gesamte Haftklebemasse mindestens 40 Gew.-%, vorzugsweise mindestens 45 Gew.-% und gleichzeitig maximal 55 Gew.-%.

Die Haftklebemassen weisen neben dem mindestens einen Vinylaromatenblockcopolymer mindestens ein Klebharz (a2) auf, um die Adhäsion in gewünschter Weise zu erhöhen. Das Klebharz sollte mit dem Elastomerblock der Blockcopolymere verträglich sein.

Unter einem "Klebharz" wird entsprechend dem allgemeinen Fachmannverständnis ein oligomeres oder polymeres Harz verstanden, das die Adhäsion (den Tack, die Eigenklebrigkeit) der Haftklebemasse im Vergleich zu der keinen Klebharz enthaltenden, ansonsten aber identischen Haftklebemasse erhöht.

Entsprechend wird zu mindestens 90 Gew.-%, bevorzugt zu mindestens 95 Gew.-% (bezogen auf den Gesamtharzanteil) ein Harz gewählt mit insbesondere einem DACP (diacetone alcohol cloud point) von größer +5 °C, bevorzugt größer +10 °C und kleiner +65 °C (wenn ein Polyisopren-Blockcopolymer im Elastomerteil vorhanden ist), bevorzugt kleiner +50 °C (wenn kein Polyisopren-Blockcopolymer im Elastomerteil vorhanden ist). Das zumindest eine Harz weist zudem insbesondere einen MMAP (mixed methylcyclohexane aniline point) von mindestens +50 °C, bevorzugt von mindestens +60 °C auf und von höchstens +100 °C (wenn ein Polyisopren-Blockcopolymer im Elastomerteil vorhanden ist), bevorzugt von höchstens +90 °C (wenn kein Polyisopren-Blockcopolymer im Elastomerteil vorhanden ist). Das zumindest eine Klebharz weist eine Erweichungstemperatur (Ring & Ball) von größer gleich 70 °C, vorzugsweise größer gleich 100 °C und bis zu 150 °C auf.

Als Klebrigmacher für die Haftklebemasse(n) werden hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5/C_9$-

oder Cg-Monomerströmen, Polyterpenharze auf Basis von $\alpha$-Pinen und/oder ß-Pinen und/oder $\delta$-Limonen eingesetzt. Vorgenannte Klebharze können sowohl allein als auch im Gemisch eingesetzt werden. Klebharze, hydriert oder nicht hydriert, die auch Sauerstoff enthalten, können optional bevorzugt bis zu einem maximalen Anteil von 10 % bezogen auf die Gesamtmasse der Harze in der Klebemasse eingesetzt werden.

Besonders bevorzugt handelt es sich bei den Klebharzen zu mindestens 75 Gew.-% (bezogen auf den Gesamtharzanteil) um Kohlenwasserstoffharze oder Terpenharze oder eine Mischung dergleichen.

Die erfindungsgemäße Haftklebemasse enthält bevorzugt 40 bis 60 Gew.-%, bezogen auf das Gesamtgewicht der Haftklebemasse, mindestens ein Klebharz.

Der Anteil der bei Raumtemperatur (zäh)flüssigen Weichharze (a3) beträgt bis zu 5 Gew.-% bezogen auf die gesamte Haftklebemasse. Es kann jedoch auch auf bei Raumtemperatur (zäh)flüssige Weichharze verzichtet werden. Vorteilhaft wird auf niederviskose Weichmacher wie zum Beispiel Mineralöle und Pflanzenöle komplett verzichtet. Kommen Weichharze zum Einsatz, dann werden zähflüssige Weichharze mit einer Schmelzviskosität bei 25 °C und 1 Hz von zumindest 25 Pa*s, insbesondere von zumindest 50 Pa*s und einer Erweichungstemperatur von < 25 °C bevorzugt. Die Schmelzviskosität wird nach Test VI bestimmt.

Als weitere Additive (a4) können typischerweise genutzt werden:

- primäre Antioxidantien wie zum Beispiel sterisch gehinderte Phenole, vorzugsweise mit einem Anteil von 0,2 bis 1 Gew.-% bezogen auf das Gesamtgewicht der Haftklebemasse
- sekundäre Antioxidantien, wie zum Beispiel Phosphite, Thioester oder Thioether, vorzugsweise mit einem Anteil von 0,2 bis 1 Gew.-% bezogen auf das Gesamtgewicht der Haftklebemasse
- Prozessstabilisatoren wie zum Beispiel C-Radikalfänger, vorzugsweise mit einem Anteil von 0,2 bis 1 Gew.-% bezogen auf das Gesamtgewicht der Haftklebemasse
- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Haftklebemasse
- Verarbeitungshilfsmittel, vorzugsweise mit einem Anteil von 0,2 bis 1 Gew.-% bezogen auf das Gesamtgewicht der Haftklebemasse
- Endblockverstärkerharze, vorzugsweise mit einem Anteil von 0,2 bis 10 Gew.-% bezogen auf das Gesamtgewicht der Haftklebemasse sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Haftklebemasse.

Die Art und Menge der Abmischkomponenten kann bedarfsweise ausgewählt werden. Wenn Additive (a4) zum Einsatz kommen und migrierfähig sind, dann werden Additive gleicher Art als (b4) in der Trägerschicht ebenfalls eingesetzt.

Erfindungsgemäß ist es auch, wenn die Klebemasse einige vorzugsweise alle der genannten Zuschlagstoffe jeweils nicht aufweist. Sollten einzelne Zuschlagstoffe Migrationspotenzial aufweisen, dann kommen diese Substanzen auch in den Formulierungen für die Trägerschichten B zum Einsatz.

In einer Ausführungsform der vorliegenden Erfindung enthält die Haftklebemasse auch weitere Additive, beispielhaft, aber nicht einschränkend erwähnt seien kristalline oder amorphe Oxide, Hydroxide, Carbonate, Nitride, Halogenide, Carbide oder gemischte Oxid-/Hydroxid-/Halogenidverbindungen des Aluminiums, Siliciums, Zirkoniums, Titans, Zinns, Zinks, Eisens oder der (Erd)alkalimetalle. Hierbei handelt es sich im Wesentlichen um Tonerden zum Beispiel Aluminiumoxide, Boehmit, Bayerit, Gibbsit, Diaspor und ähnliche. Ganz besonders geeignet sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen, können verwendet werden.

Die Klebemassen können auch mit Farbstoffen oder Pigmenten eingefärbt sein. Die Klebemassen können weiß, schwarz oder farbig sein.

Die Beigabe von Kieselsäuren, vorteilhaft von gefällter, mit Dimethyldichlorsilan oberflächenmodifizierter Kieselsäure, kann genutzt werden, um die Wärmescherfestigkeit der Haftklebemasse einzustellen.

Die Haftklebemasse für die Haftklebemasseschicht ist schäumbar beziehungsweise liegt geschäumt vor. Zu diesem Zweck sind Schäumungsmittel in der Rezeptur vorgesehen. Sehr bevorzugt werden als Schäumungsmittel Mikroballons in expandierter oder expandierbarer Form genutzt. Es können jedoch auch chemische Schäumungsmittel allein oder in Kombination mit anderen Schäumungsmitteln eingesetzt werden. Haftklebemassen können auch physikalisch, also durch Einarbeitung gasförmiger oder überkritsch fluider Stoffe oder Stoffgemische, geschäumt werden oder sein.

Die Schäumung erfolgt insbesondere durch das Einbringen und nachfolgende Expandieren von Mikroballons.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 $\mu$m Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Akzo Nobel.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Eine geschäumte erfindungsgemäße Haftklebemasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel xxx DE (Dry Expanded) von der Firma Akzo Nobel kommerziell erhältlich.

Erfindungsgemäß bevorzugt weisen mindestens 90 % aller von Mikroballons gebildeten Hohlräume einen maximalen Durchmesser von 20 bis 75 $\mu$m, stärker bevorzugt von 25 bis 65 $\mu$m, auf. Unter dem "maximalen Durchmesser" wird die maximale Ausdehnung eines Mikroballons in beliebiger Raumrichtung verstanden.

Die Bestimmung der Durchmesser erfolgt anhand einer Kryobruchkante im Rasterelektronenmikroskop (REM) bei 500-facher Vergrößerung. Von jedem einzelnen Mikroballon wird grafisch der Durchmesser ermittelt.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Klebemasse liegt zwischen 0,5 Gew.-% und 2,5 Gew.-%, ganz insbesondere zwischen 1,0 und 2,0 Gew.-% jeweils bezogen auf die Gesamtzusammensetzung der Klebemasse. Die Angaben beziehen sich auf unexpandierte Mikroballons.

Eine erfindungsgemäß genutzte, expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nichtthermoplastischem Glas.

Geeignet für die erfindungsgemäße Haftklebemasse sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons") .

Die absolute Dichte einer geschäumten erfindungsgemäßen Haftklebemasse beträgt bevorzugt 450 bis 950 kg/m$^3$, bevorzugt 600 bis 800 kg/m$^3$.

Die relative Dichte beschreibt das Verhältnis der Dichte der geschäumten erfindungsgemäßen Haftklebemasse zur Dichte der rezepturidentischen, ungeschäumten erfindungsgemäßen Haftklebemasse. Die relative Dichte einer erfindungsgemäßen Haftklebemasse beträgt vorzugsweise 0,20 bis 0,99, stärker bevorzugt 0,30 bis 0,90, insbesondere 0,50 bis 0,85.

Gemäß einer bevorzugten Ausführungsform der Erfindung besteht die Klebemasse nur aus Vinylaromatenblockcopolymeren (a1), Klebharzen (a2), gegebenenfalls Weichharzen (a3), Mikroballons und gegebenenfalls den oben erwähnten Additiven (a4), wobei als Klebharze (a2) solche eingesetzt werden, wie sie oben beschrieben sind.

Weiter vorzugsweise besteht die Klebemasse aus folgender Zusammensetzung:

- Vinylaromatenblockcopolymere                40 bis 55 Gew.-%

(fortgesetzt)

| | |
|---|---|
| • Klebharze und ggf. Weichharze | 40 bis 59,3 Gew.-% |
| • Mikroballons | 0,5 bis 2,5 Gew.-% |
| • Additive | 0,2 bis 10 Gew.-% |

Weiter vorzugsweise besteht die Klebemasse aus folgender Zusammensetzung:

| | |
|---|---|
| • Vinylaromatenblockcopolymere | 45 bis 55 Gew.-% |
| • Klebharze und ggf. Weichharze | 40 bis 54,3 Gew.-% |
| • Mikroballons | 0,5 bis 2,5 Gew.-% |
| • Additive | 0,2 bis 10 Gew.-% |

Weiter vorzugsweise besteht die Klebemasse aus folgender Zusammensetzung:

| | |
|---|---|
| • Vinylaromatenblockcopolymere | 40 bis 55 Gew.-% |
| • Klebharze | 42,5 bis 59,5 Gew.-% |
| • Mikroballons | 0,5 bis 2,5 Gew.-% |

Eine weitere vorteilhafte Klebemasse enthält folgende Zusammensetzung beziehungsweise besteht besonders bevorzugt aus folgender Zusammensetzung:

| | |
|---|---|
| • Vinylaromaten-Triblockcopolymere | 15 bis 45 Gew.-% |
| • Vinylaromaten-Diblockcopolymere | 10 bis 35 Gew.-% |
| • Klebharze und ggf. Weichharze | 40 bis 59,3 Gew.-% |
| • Mikroballons | 0,5 bis 2,5 Gew.-% |
| • Additive | 0,2 bis 10 Gew.-% |

Eine weitere vorteilhafte Klebemasse enthält folgende Zusammensetzung beziehungsweise besteht besonders bevorzugt aus folgender Zusammensetzung:

| | |
|---|---|
| • Vinylaromaten-Multiblockcopolymere | 15 bis 45 Gew.-% |
| • Vinylaromaten-Diblockcopolymere | 10 bis 35 Gew.-% |
| • Klebharze und ggf. Weichharze | 40 bis 59,3 Gew.-% |
| • Mikroballons | 0,5 bis 2,5 Gew.-% |
| • Additive | 0,2 bis 10 Gew.-% |

Eine weitere vorteilhafte Klebemasse besteht aus folgender Zusammensetzung beziehungsweise besteht besonders bevorzugt aus folgender Zusammensetzung:

| | |
|---|---|
| • Vinylaromaten-Multiblockcopolymere | 15 bis 30 Gew.-% |
| • Vinylaromaten-Triblockcopolymere | 5 bis 30 Gew.-% |
| • Vinylaromaten-Diblockcopolymere | 10 bis 30 Gew.-% |
| • Klebharze und ggf. Weichharze | 40 bis 59,3 Gew.-% |
| • Mikroballons | 0,5 bis 2,5 Gew.% |
| • Additive | 0,2 bis 10 Gew.-% |

*2.) Dehnbare Trägerschicht B*

Erfindungsgemäße Selbstklebestreifen enthalten zumindest eine Lage eines dehnbaren Trägermaterials.
Unter Verwendung der oben genannten geschäumten Haftklebemasseschichten hergestellte Selbstklebestreifen sind gestaltet als ein- oder insbesondere beidseitig selbstklebend ausgerüstete Selbstklebebänder mit einem Zwischenträger, der entweder in einer Haftklebemassenschicht oder zwischen zwei Haftklebemassenschichten angeordnet ist.

Bevorzugt ist eine Ausführungsform des Selbstklebstreifens, bei dem der Zwischenträger nur aus einer einzigen Schicht aus einer Blockcopolymer haltigen Formulierung besteht.

Dabei können die doppelseitigen Produkte einen symmetrischen oder einen asymmetrischen Produktaufbau aufweisen.

Vom erfinderischen Gedanken umfasst sind Aufbauten mit einem dehnbaren Zwischenträger in der Mitte des Selbstklebestreifens, insbesondere in der Mitte der einzigen Haftklebemassenschicht, wobei die Dehnbarkeit des Zwischenträgers ausreichend sein muss, um ein Ablösen des Klebstreifens durch dehnendes Verstrecken auch unter schwierigen Ablösebedingungen zu erlauben.

Die maximale Dehnung der Trägerschicht liegt erfindungsgemäß mindestens auf dem Werteniveau wie die maximale Dehnung der Haftklebemasseschicht(en). Sie ist bevorzugt größer.

Die zumindest eine Trägerschicht besteht aus einer Formulierung, die auf Basis von zumindest einem Polyvinylaromat-Polydien-Blockcopolymer (b1) und zumindest einem Klebharz (b2) aufgebaut ist.

Bevorzugt ist als Polyvinylaromat-Polydien-Blockcopolymer (b1) mindestens ein Synthesekautschuk in Form eines Blockcopolymers mit einem Aufbau A-B-A, $(A-B)_n$, $(AB)_nX$ oder $(A-B-A)_nX$, worin

- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen oder für im Polydien-Block ein teilhydriertes Derivat eines solchen Polymers;
- X für den Rest eines Kopplungsreagenzes oder Initiators und
- n für eine ganze Zahl ≥ 2 stehen.

Insbesondere sind alle Synthesekautschuke der Formulierung für die Trägerschicht Blockcopolymere mit einem Aufbau wie vorstehend dargelegt. Die Formulierung für Trägerschichten kann somit auch Gemische verschiedener Blockcopolymere mit einem Aufbau wie vorstehend enthalten.

Geeignete Blockcopolymere (Vinylaromatenblockcopolymere) umfassen also einen oder mehrere gummiartige Blöcke B (Weichblöcke). Zumindest ein Blockcopolymer weist zwei oder mehrere glasartige Blöcke A (Hartblöcke) auf. Ein Synthesekautschuk der erfindungsgemäßen Formulierung für die Trägerschicht ist ein Blockcopolymer mit einem Aufbau A-B-A, $(A-B)_2X$, $(A-B)_3X$ oder $(A-B)_4X$, wobei für A, B und X die vorstehenden Bedeutungen gelten. Ganz besonders bevorzugt sind alle Synthesekautschuke der Formulierung für die Trägerschicht Blockcopolymere mit einem Aufbau A-B-A, $(A-B)_2X$, $(AB)_3X$ oder $(A-B)_4X$, wobei für A, B und X die vorstehenden Bedeutungen gelten. Insbesondere ist der Synthesekautschuk der Formulierung für die Trägerschicht ein Gemisch aus Blockcopolymeren mit einem Aufbau A-B-A, $(A-B)_2X$, $(A-B)_3X$ oder $(A-B)_4X$, das bevorzugt mindestens Triblockcopolymere A-B-A oder $(A-B)_2X$ enthält.

Weiterhin vorteilhaft ist ein Gemisch aus Triblockcopolymeren und $(A-B)_n$- oder $(A-B)_nX$-Blockcopolymeren mit n größer gleich 3. Es können auch Diblockcopolymere A-B in Kombination mit den genannten Blockcopolymeren genutzt werden. Da diese aber zu einer Reduktion der Zugfestigkeit führen, wird ihr Anteil jedoch so gering wie möglich gewählt (und zwar kleiner als 20 Gew.-% bezogen auf den Gesamtblockcopolymeranteil in der Formulierung für die Trägerschichten, insbesondere liegt er bei ≤ 18 Gew.-%, sehr bevorzugt bei ≤ 10 Gew.-%). Vorteilhaft wird auf sie komplett verzichtet.

Der Anteil an Triblockcopolymer oder Multiblockcopolymer (linear oder radial) liegt bei mindestens 80 Gew.-%, bevorzugt bei mindestens 90 Gew.-% in Bezug auf die Menge aller Blockcopolymere im Elastomerteil (b1). Bevorzugt unter den Triblockcopolymeren und Multiblockcopolymeren werden Triblockcopolymere.

Als Formulierung für die Trägerschicht finden bevorzugt solche auf Basis von Blockcopolymeren enthaltend Polymerblöcke überwiegend gebildet von Vinylaromaten (A-Blöcke), bevorzugt Styrol, und solche überwiegend gebildet durch Polymerisation von 1,3-Dienen (B-Blöcke) wie zum Beispiel Butadien und Isopren oder einem Copolymer aus diesen Anwendung. Dabei können die Produkte auch teilweise im Dien-Block hydriert sein. Im Hinblick auf teilhydrierte Derivate sind insbesondere solche Blockcopolymere geeignet, bei denen vor allem etwaige Vinyl-Gruppen, also Wiederholeinheiten, die in der Seitenkette ungesättigt vorliegen wie 1,2-Polybutadien, 1,2-Polyisopren oder 3,4-Polyisopren, hydriert vorliegen.

Vorzugsweise besitzen die Blockcopolymere der Haftklebemassen Polystyrolendblöcke.

Die aus den A- und B-Blöcken resultierenden Blockcopolymere können gleiche oder unterschiedliche B-Blöcke enthalten. Die Blockcopolymere können lineare A-B-A-Strukturen aufweisen. Einsetzbar sind ebenfalls Blockcopolymere von radialer Gestalt sowie sternförmige und lineare Multiblockcopolymere. Sämtliche der vorgenannten Polymere können allein oder im Gemisch miteinander genutzt werden.

Anstelle der bevorzugten Polystyrolblöcke können als Vinylaromaten auch Polymerblöcke auf Basis anderer aromatenhaltiger Homo- und Copolymere (bevorzugt $C_8$- bis $C_{12}$-Aromaten) mit Glasübergangstemperaturen von größer 75 °C genutzt werden wie zum Beispiel α-methylstyrolhaltige Aromatenblöcke. Weiterhin können auch gleiche oder unterschiedliche A-Blöcke enthalten sein.

Vinylaromaten zum Aufbau des Blocks A umfassen bevorzugt Styrol, α-Methylstyrol und/oder andere Styrol-Derivate. Der Block A kann somit als Homo- oder Copolymer vorliegen. Besonders bevorzugt ist der Block A ein Polystyrol.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teilhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 25 °C insbesondere mindestens 50 °C und für B-Blöcke höchstens 25 °C insbesondere höchstens -25 °C) wieder.

In einer bevorzugten Ausgestaltung beträgt der Anteil der Vinylaromatenblockcopolymere, insbesondere Styrolblockcopolymere in Summe bezogen auf die gesamte Formulierung für die Trägerschicht mindestens 40 Gew.-%, vorzugsweise mindestens 45 Gew.-%.

Ein zu geringer Anteil an Vinylaromatenblockcopolymeren hat zur Folge, dass die Zugfestigkeit der Formulierung für die Trägerschicht relativ niedrig ist, so dass die Reißerbeständigkeit, die zum Strippen erforderlich ist, zu gering ist.

Der maximale Anteil der Vinylaromatenblockcopolymere, insbesondere Styrolblockcopolymere in Summe bezogen auf die gesamte Haftklebemasse beträgt maximal 60 Gew.-%, bevorzugt maximal 55 Gew.-%. Liegt der Elastomergehalt zu hoch, wird die zur Dehnung erforderliche Kraft (Strippkraft) zu hoch.

Der Anteil an Vinylaromatenblockcopolymeren, insbesondere Styrolblockcopolymeren in der Formulierung für die Trägerschicht kann genauso ausgewählt werden, wie er auch in den Haftklebemasseschichten vorkommt. Im Hinblick auf optimale Reißerbeständigkeit würde aber eher ein höherer Anteil ausgewählt werden.

Der Anteil an Polyvinylaromaten, insbesondere Polystyrol in den Vinylaromatenblockcopolymeren, insbesondere Styrolblockcopolymeren für die Formulierungen für die Trägerschicht liegt bei mindestens 20 Gew.-%, bevorzugt bei mindestens 25 Gew.-% und bei höchstens 45 Gew.-%, bevorzugt bei höchstens 35 Gew. -%. Die gewichtsmittlere Molmasse der Vinylaromatenblockcopolymere, insbesondere Styrolblockcopolymere für die Formulierungen für die Trägerschicht liegt bei mindestens 85 000 g/mol, bevorzugt bei mindestens 100 000 g/mol. Die gewichtsmittlere Molmasse wird dabei mittels GPC gemäß Test II bestimmt . Eine derartige Ausgestaltung der Vinylaromatenblockcopolymere, insbesondere Styrolblockcopolymere für die Formulierungen für die Trägerschicht führt zu einer maximalen Zugfestigkeit für die Trägerschicht, was für den Ablöseprozess wichtig ist.

Die Formulierungen für die Trägerschicht weisen neben dem mindestens einen Vinylaromatenblockcopolymer (b1) mindestens ein Klebharz (b2) auf. Der Anteil an Klebharz (b2) in Formulierungen für die Trägerschicht führt dazu, dass Migration von Klebharzen aus den Haftklebemasseschichten in die Trägerschicht(en) entgegengewirkt wird und sich so Klebeigenschaften über die Zeit nur so geringfügig wie möglich oder gar nicht ändern. Es werden daher für die Formulierungen für die Trägerschicht dieselben Klebharze ausgewählt, wie sie auch für die Haftklebemasseschichten zum Einsatz kommen. Insofern gelten auch im Zusammenhang mit den Klebharzen für die Formulierungen für die Trägerschicht die Definitionen, die für die Klebharze für die Haftklebemasseschichten gemacht wurden.

Die Formulierungen für die Trägerschicht können neben dem mindestens einen Vinylaromatenblockcopolymer (b1) und dem mindestens einen Klebharz (b2) auch ein oder mehrere Weichharze (b3) aufweisen, sofern in der Haftklebemasseschicht ebenfalls ein Weichharz zum Einsatz kommt. Der Anteil an Weichharz (b3) in Formulierungen für die Trägerschicht führt dazu, dass Migration von Weichharzen aus den Haftklebemasseschichten in die Trägerschicht(en) entgegengewirkt wird und sich so Klebeigenschaften über die Zeit nur so geringfügig wie möglich oder gar nicht ändern. Es werden daher für die Formulierungen für die Trägerschicht dieselben Weichharze ausgewählt, wie sie auch für die Haftklebemasseschichten zum Einsatz kommen. Insofern gelten auch im Zusammenhang mit den Weichharzen für die Formulierungen für die Trägerschicht die Definitionen, die für die Weichharze für die Haftklebemasseschichten gemacht wurden.

Als weitere Additive (b4) können typischerweise genutzt werden:

- primäre Antioxidantien wie zum Beispiel sterisch gehinderte Phenole, vorzugsweise mit einem Anteil von 0,2 bis 1 Gew.-% bezogen auf das Gesamtgewicht der Formulierung für die Trägerschicht
- sekundäre Antioxidantien, wie zum Beispiel Phosphite, Thioester oder Thioether, vorzugsweise mit einem Anteil von 0,2 bis 1 Gew.-% bezogen auf das Gesamtgewicht der Formulierung für die Trägerschicht
- Prozessstabilisatoren wie zum Beispiel C-Radikalfänger,

vorzugsweise mit einem Anteil von 0,2 bis 1 Gew.-% bezogen auf das Gesamtgewicht der Formulierung für die Trägerschicht
- Lichtschutzmittel wie zum Beispiel UV-Absorber oder sterisch gehinderte Amine,
vorzugsweise mit einem Anteil von 0,2 bis 1 Gew.-% bezogen auf das Gesamtgewicht der Formulierung für die Trägerschicht
- Verarbeitungshilfsmittel,
vorzugsweise mit einem Anteil von 0,2 bis 1 Gew.-% bezogen auf das Gesamtgewicht der Formulierung für die Trägerschicht
- Endblockverstärkerharze,
vorzugsweise mit einem Anteil von 0,2 bis 10 Gew.-% bezogen auf das Gesamtgewicht der Formulierung für die Trägerschicht sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Formulierung für die Trägerschicht.

Die Art und Menge der Abmischkomponenten kann bedarfsweise ausgewählt werden. Wenn Additive (b4) zum Einsatz kommen und migrierfähig sind, dann werden Additive gleicher Art als (a4) in der Klebemasseschicht oder den Klebemasseschichten ebenfalls eingesetzt.

Erfindungsgemäß ist es auch, wenn die Formulierung für die Trägerschicht einige vorzugsweise alle der genannten Zuschlagstoffe jeweils nicht aufweist. Sollten einzelne Zuschlagstoffe Migrationspotenzial aufweisen, dann kommen diese Substanzen auch in den Haftklebemasseschichten zum Einsatz.

In einer Ausführungsform der vorliegenden Erfindung enthält die Formulierung für die Trägerschicht auch weitere Additive, beispielhaft, aber nicht einschränkend erwähnt seien kristalline oder amorphe Oxide, Hydroxide, Carbonate, Nitride, Halogenide, Carbide oder gemischte Oxid-/Hydroxid-/Halogenidverbindungen des Aluminiums, Siliciums, Zirkoniums, Titans, Zinns, Zinks, Eisens oder der (Erd)alkalimetalle. Hierbei handelt es sich im Wesentlichen um Tonerden zum Beispiel Aluminiumoxide, Boehmit, Bayerit, Gibbsit, Diaspor und ähnliche. Ganz besonders geeignet sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen, können verwendet werden.

Die Formulierungen für die Trägerschicht können auch mit Farbstoffen oder Pigmenten eingefärbt sein. Die Formulierungen für die Trägerschicht können weiß, schwarz oder farbig sein.

Die Beigabe von Kieselsäuren, vorteilhaft von gefällter, mit Dimethyldichlorsilan oberflächenmodifizierter Kieselsäure, kann genutzt werden, um die Wärmescherfestigkeit der Trägerschicht einzustellen.

Die Trägerschicht ist vorzugsweise im Wesentlichen nicht geschäumt, um maximale Reißerbeständigkeit beim Abstrippen zur erreichen.

Gemäß einer bevorzugten Ausführungsform der Erfindung besteht die Formulierung für die Trägerschicht nur aus Vinylaromatenblockcopolymeren (b1), Klebharzen (b2) und gegebenenfalls den oben erwähnten Additiven (b4).

Weiter vorzugsweise besteht die Formulierung für die Trägerschicht aus folgender Zusammensetzung:

| | |
|---|---|
| • Vinylaromatenblockcopolymere | 40 bis 60 Gew.-% |
| • Klebharze und ggf. Weichharze | 40 bis 59,8 Gew.-% |
| • Additive | 0,2 bis 10 Gew.-% |

Weiter vorzugsweise besteht die Formulierung für die Trägerschicht aus folgender Zusammensetzung:

| | |
|---|---|
| • Vinylaromatenblockcopolymere | 45 bis 55 Gew.-% |
| • Klebharze und ggf. Weichharze | 40 bis 54,8 Gew.-% |
| • Additive | 0,2 bis 10 Gew.-% |

Weiter vorzugsweise besteht die Formulierung für die Trägerschicht aus folgender Zusammensetzung:

| | |
|---|---|
| • Vinylaromatenblockcopolymere | 40 bis 60 Gew.-% |

(fortgesetzt)

| • Klebharze | 40 bis 60 Gew.-% |
|---|---|

Weiter vorzugsweise enthält die Formulierung für die Trägerschicht die folgende Zusammensetzung:

| • Vinylaromaten-Triblockcopolymere | 35 bis 59,8 Gew.-% |
|---|---|
| • Klebharze und ggf. Weichharze | 40 bis 64,8 Gew.-% |
| • Additive | 0,2 bis 10 Gew.-% |

Die Träger können mehrlagig ausgestaltet sein.

Die Dicke der Trägerschicht B liegt im Bereich von 70 bis 150 $\mu$m, bevorzugt zwischen 80 und 120 $\mu$m. Gut geeignet für dünne Selbstklebestreifen sind Trägerschichten mit einer Dicke von etwa 80 $\mu$m oder etwa 90 $\mu$m oder etwa 100 $\mu$m.

Die Dichte der Trägerschicht B beträgt insbesondere mindestens 950 g/cm$^3$.

Des Weiteren können die Träger Deckschichten aufweisen, beispielsweise Sperrschichten, die ein Eindringen von Komponenten aus der Klebemasse in den Zwischenträger oder umgekehrt unterbinden. Aufgrund der Nutzung gleichartiger Klebharze in Haftklebemasseschicht(en) und Trägerschicht(en) sind solche Sperrschichten zu diesem Zweck aber nicht zwingend erforderlich. Diese Deckschichten können auch Barriereeigenschaften haben, um so ein Durchdiffundieren von Wasserdampf und/oder Sauerstoff zu verhindern.

Zur besseren Verankerung der Haftklebemassen auf dem Träger können die Träger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Die Rückseite des Trägers kann einer antiadhäsiven physikalischen Behandlung oder Beschichtung unterzogen sein, insbesondere bei einseitig haftklebrigen Selbstklebeprodukten.

Die Trägerschicht B weist eine Bruchdehnung $\varepsilon_{max}$(B) auf, die sehr bevorzugt größer ist als die Bruchdehnung der Haftklebemasseschicht A $\varepsilon_{max}$(A). Auf diese Weise wird erreicht, dass die Trägerschicht über den Zustand hinaus gedehnt werden kann, an dem bereits ein für die Haftklebemasseschicht zum Ablösen erforderlicher Orientierungszustand erzeugt wird, also nahe $\varepsilon_{max}$(A).

Schließlich kann der Haftklebestreifen ein- oder beidseitig mit einem Liner, also einem temporären Träger, der ein- oder beidseitig antiadhäsiv beschichtet ist, eingedeckt sein. Ein Liner (Trennpapier, Trennfolie) ist nicht Bestandteil eines Klebebandes sondern nur ein Hilfsmittel zu dessen Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Die zur Dehnung erforderliche Kraft bei 50 % Dehnung sollte kleiner als 20 N/cm sein, bevorzugt kleiner als 10 N/cm, um ein einfaches Ablösen ohne allzu großen Kraftaufwand zu ermöglichen.

Besonders vorteilhaft ist ein Selbstklebestreifen bestehend aus

- einem einschichtigen Zwischenträger, vorzugsweise aus harzmodifiziertem Polystyrol-Polybutadien-Blockcopolymer, wobei der Träger eine Reißdehnung von mindestens 800 %, vorzugsweise 1000 %, und gegebenenfalls ein Rückstellvermögen von über 50 % aufweist und wobei die Zugfestigkeit des Trägers bei mindestens 8 MPa und bevorzugt bei höchstens 20 MPa, geeigneterweise zwischen 10 MPa und 15 MPa liegt, wobei
- auf den Träger beidseitig jeweils eine Haftklebemassenschicht aus der geschäumten Haftklebemasse aufgebracht ist, auf Basis von Polystyrol-Polybutadien-Blockcopolymeren und Klebharzen, wobei weiter vorzugsweise die Zusammensetzung der Haftklebemassen identisch ist und wobei
- eingesetztes Harz in Haftklebemasseschichten und Trägerschicht von gleichem Typ ist und im Wesentlichen in gleicher Menge in Bezug auf den Anteil an Polybutadien-Blöcken in den jeweiligen Schichten vorhanden ist.

Besonders vorteilhaft ist des Weiteren ein Selbstklebestreifen bestehend aus

- einem einschichtigen Zwischenträger, vorzugsweise aus harzmodifiziertem Polystyrol-Polyisopren-Blockcopolymer, wobei der Träger eine Reißdehnung von mindestens 1000 %, vorzugsweise 1200 %, und gegebenenfalls ein Rückstellvermögen von über 50 % aufweist und wobei die Zugfestigkeit des Trägers bei mindestens 8 MPa und bevorzugt bei höchstens 20 MPa, geeigneterweise zwischen 10 MPa und 15 MPa liegt, wobei
- auf den Träger beidseitig jeweils eine Haftklebemassenschicht aus der geschäumten Haftklebemasse aufgebracht ist, auf Basis von Polystyrol-Polydien-Blockcopolymeren und Klebharzen, wobei weiter vorzugsweise die Zusammensetzung der Haftklebemassen identisch ist und wobei

- eingesetztes Harz in Haftklebemasseschichten und Trägerschicht von gleichem Typ ist.

Besonders vorteilhaft ist des Weiteren ein Selbstklebestreifen bestehend aus

- einem einschichtigen Zwischenträger, vorzugsweise aus harzmodifiziertem Polystyrol-Polydien-Blockcopolymer, wobei der Träger eine Reißdehnung von mindestens 800 %, vorzugsweise 1000 %, und gegebenenfalls ein Rückstellvermögen von über 50 % aufweist und wobei die Zugfestigkeit des Trägers bei mindestens 8 MPa und bevorzugt bei höchstens 20 MPa, geeigneterweise zwischen 10 MPa und 15 MPa liegt, wobei
- auf den Träger beidseitig jeweils eine Haftklebemassenschicht aus der geschäumten Haftklebemasse aufgebracht ist, auf Basis von Polystyrol-Polybutadienbutylen-Blockcopolymeren und Klebharzen, wobei weiter vorzugsweise die Zusammensetzung der Haftklebemassen identisch ist und wobei
- eingesetztes Harz in Haftklebemasseschichten und Trägerschicht von gleichem Typ ist.

Die Herstellung und Verarbeitung der Haftklebemassen kann sowohl aus der Lösung als auch aus der Schmelze erfolgen. Das Aufbringen der Haftklebemassen auf die Trägerschicht kann durch direkte Beschichtung oder durch Laminierung, insbesondere Heißlaminierung erfolgen.
Die Herstellung und Verarbeitung der dehnbaren Trägerschicht kann unabhängig ebenfalls sowohl aus der Lösung als auch aus der Schmelze erfolgen. Das Aufbringen der Haftklebemassen auf die Zwischenträgerschicht kann durch direkte Beschichtung oder durch Laminierung, insbesondere Heißlaminierung erfolgen. Die Herstellung des Mehrschichtaufbaus kann auch durch Coextrusion erfolgen.
Die Herstellung einer erfindungsgemäßen Klebemasse, die expandierte Mikroballons enthält, kann vorteilhaft so ablaufen, dass

- die Bestandteile zur Bildung der Klebemasse wie Polymere, Harze oder Füllstoffe und nicht expandierten Mikroballons in einem ersten Mischaggregat gemischt werden und unter Überdruck auf Expansionstemperatur erhitzt werden
- die Mikroballons beim Austritt aus dem Mischaggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Träger- oder Releasematerial aufgebracht wird.

Zur Herstellung einer erfindungsgemäß nutzbaren Klebemasse, die expandierte Mikroballons enthält, können alle Verfahren nach dem Stand der Technik zum Einsatz kommen. Hierzu sei insbesondere auf die Ausführungen der DE 10 2015 206 076 A1 hingewiesen.
Typische Konfektionierformen der erfindungsgemäßen Selbstklebestreifen sind Klebebandrollen sowie Klebestreifen, wie sie zum Beispiel in Form von Stanzlingen erhalten werden.
Vorzugsweise weisen alle Schichten im Wesentlichen die Form eines Quaders auf. Weiter vorzugsweise sind alle Schichten vollflächig miteinander verbunden.
Optional kann ein nicht haftklebriger Anfasserbereich vorgesehen sein, von welchem aus der Ablöseprozess ausgeführt werden kann.
Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.
Der erfindungsgemäße Selbstklebfolienstreifen weist vorzugsweise eine Dicke auf von 90 $\mu$m bis 250 $\mu$m, weiter vorzugsweise von 100 bis 175 $\mu$m. Sehr vorteilhaft ist eine Dicke von etwa 125 $\mu$m oder von etwa 150 $\mu$m.
Beispiele für Ausführungsformen (Außenschicht | Trägerschicht | gegebenenfalls Außenschicht) sind

$$20 \ \mu m \ | \ 70 \ \mu m = 90 \ \mu m$$

$$20 \ \mu m \ | \ 80 \ \mu m = 100 \ \mu m$$

$$20 \ \mu m \ | \ 70 \ \mu m \ | \ 20 \ \mu m = 110 \ \mu m$$

$$50 \ \mu m \ | \ 150 \ \mu m \ | \ 50 \ \mu m = 250 \ \mu m$$

$$25 \ \mu m \ | \ 100 \ \mu m \ | \ 25 \ \mu m = 150 \ \mu m$$

$$50 \ \mu m \ | \ 100 \ \mu m \ | \ 50 \ \mu m = 200 \ \mu m$$

$$35 \ \mu m \ | \ 80 \ \mu m \ | \ 35 \ \mu m = 150 \ \mu m$$

$$75 \ \mu m \ | \ 100 \ \mu m \ | \ 75 \ \mu m = 250 \ \mu m$$

Die erfindungsgemäßen Selbstklebestreifen eignen sich besonders gut zur Verklebung von Bauteilen in Mobilgeräten. Sie erfüllen dazu folgende Anforderungen:

| Eigenschaft | Messmethode | Typischer Bereich | Bevorzugter Bereich | Sehr bevorzugter Bereich |
|---|---|---|---|---|
| Schockbeständigkeit | DuPont z | ≥ 500 mJ | ≥ 650 mJ | ≥ 800 mJ |
| Verklebungsfestigkeit | Klebkraft auf Stahl | ≥ 7,0 N/cm | ≥ 8,5 N/cm | ≥ 10,0 N/cm |
| Reißerbeständigkeit | Stripptest | Max. 1/3 gerissen bei 700 mm/min | Max. 1/3 gerissen bei 800 mm/min | Max. 0/3 gerissen bei 800 mm/min |

Anhand der nachfolgend beschriebenen Figuren sowie Beispielen werden besonders vorteilhafte Ausführungen der Erfindung näher erläutert, ohne damit die Erfindung unnötig einschränken zu wollen.
Es zeigen

Figur 1 einen erfindungsgemäßen dreischichtigen haftklebrigen Selbstklebestreifen,

Figur 2 einen erfindungsgemäßen dreischichtigen haftklebrigen Selbstklebestreifen in einer alternativen Ausführungsform

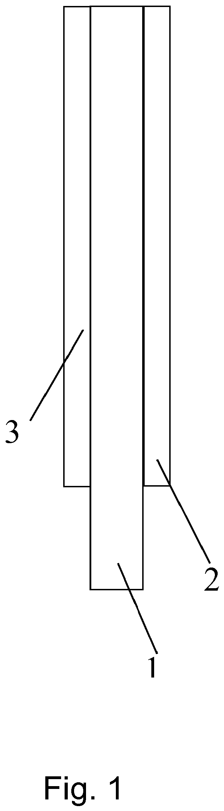

In der Figur 1 ist der erfindungsgemäße Selbstklebestreifen aus drei Schichten 1, 2, 3 gezeigt, der durch dehnendes Verstrecken wieder abgelöst werden kann.
Der Streifen besteht aus einem Träger 1, wobei der Träger 1 einschichtig ausgeführt ist. Auf dem Träger sind beidseitig außenliegende erfindungsgemäße Haftklebemassenschichten 2, 3 vorhanden.
Das überstehende Ende der Trägerschicht 1 kann als Anfasser dienen, ist aber nicht zwingend vorhanden.

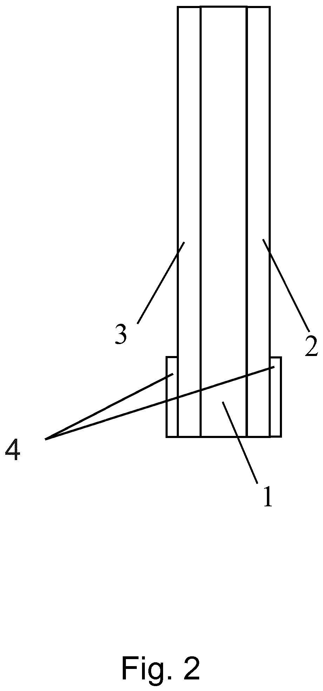

In der Figur 2 ist der erfindungsgemäße haftklebrige Selbstklebestreifen in einer Variante gezeigt, Der Selbstklebestreifen besteht aus drei Schichten 1, 2, 3, die kongruent übereinander angeordnet sind.
Um einen Anfasser zu erzeugen, an dem gezogen wird, um das dehnende Verstrecken zu erzielen, ist das eine Ende des Selbstklebefolienstreifens auf beiden Seiten durch das Aufbringen von bevorzugt silikonisierten Folien- oder Papierstücken 4 nicht haftklebrig ausgerüstet.
Nachfolgend wird die Erfindung durch einige Beispiele näher erläutert, ohne die Erfindung damit in irgendeiner Form beschränken zu wollen.

*Haftklebemassen*

Die Bestandteile der Haftklebemassen wurden hierbei 40%ig in Benzin/Toluol/Aceton gelöst, mit den in Benzin angeschlämmten Mikroballons versetzt und mit einem Streichbalken auf eine PET-Folie ausgerüstet mit einem trennenden Silikon in der gewünschten Schichtdicke ausgestrichen, anschließend bei 100 °C für 15 min das Lösungsmittel abgedampft und so die Masseschicht getrocknet. Dies ist in den aufgeführten Beispielen möglich, da hier Mikroballons genutzt werden, deren Expansionstemperatur oberhalb 100 °C liegt. Der Fachmann wählt bei Nutzung anderer Mikroballons entsprechend geeignete Herstelltemperaturen aus, ohne den Rahmen der vorliegenden Erfindung zu verlassen.
Nach dem Trocknen wurde die Klebeschicht mit einer zweiten Lage PET-Liner frei von jeglichen Lufteinschlüssen eingedeckt und für 5 min bei 150 °C zwischen den beiden Linern im Ofen geschäumt. Durch das Schäumen zwischen zwei Linern sind Produkte mit besonders glatten Oberflächen erhältlich. Alle aufgeführten Beispiele weisen einen $R_a$-Wert kleiner 15 $\mu$m auf. $R_a$, die arithmetische Mittenrauigkeit, ist der arithmetische Mittelwert aller Profilwerte des Rauheitsprofils.

*Trägerschichten*

Die Bestandteile der Formulierungen für die Trägerschichten wurden hierbei 40%ig in Benzin/Toluol/Aceton gelöst und mit einem Streichbalken auf eine PET-Folie ausgerüstet mit einem trennenden Silikon in der gewünschten Schichtdicke ausgestrichen, anschließend bei 100 °C für 15 min das Lösungsmittel abgedampft und so die Masseschicht getrocknet.

*Herstellung der mehrschichtigen Selbstklebestreifen*

Zur Herstellung der mehrschichtigen Selbstklebestreifen wurden jeweils zwei Lagen einer geschäumten Haftklebeschicht und eine Lage einer Trägerschicht zurechtgelegt. Mittels einer Gummirolle wurde zunächst eine Lage einer Haftklebemasseschicht manuell auf die erste Oberfläche der Trägerschicht blasenfrei zukaschiert und anschließend eine zweite Haftklebemasseschicht der zweiten Oberfläche der Trägerschicht zukaschiert. Hierzu wurden jeweils zuvor Liner von den in Kontakt zu bringenden Oberflächen der einzelnen Lagen entfernt. Durch Ausstanzen wurden Haftklebestreifen der gewünschten Abmessungen erhalten.

**Beispiele**

Eingesetzte Rohstoffe

| | Rohstoff | Art | Charakteristik |
|---|---|---|---|
| Elastomerteil (a1) und/oder (b1) | Kraton D1102 AS | Lineares SBS | PS-Anteil: 29 %** <br> Diblock-Anteil: 17 %** ** |
| | Kraton D1118 ES | Lineares SBS | PS-Anteil: 33 %** <br> Diblock-Anteil: 78 %** <br> M.W.(Triblock): 150.000 g/mol**** |
| | Kraton D1116 AT | Radiales SBS | PS-Anteil: 23 %** <br> Diblock-Anteil: 16 %** <br> M.W.(Multiblock radial): 300.000 g/mol**** |
| | Kraton D1101 AS | Lineares SBS | PS-Anteil: 31 %** <br> Diblock-Anteil: 16 %** <br> M.W.(Triblock): 150.000 g/mol**** |
| | Vector 4111N | Lineares SIS | PS-Anteil: 18 %*** <br> Diblock-Anteil: < 1 %*** <br> M.W.(Triblock): 150.000 g/mol**** |
| | Kraton D1165 PT | Lineares SIS | PS-Anteil: 30 %** <br> Diblock-Anteil: 20 %** <br> M.W.(Triblock): 120.000 g/mol**** |
| Klebharzteil (a2) und/oder (b2) | Piccolyte A115 (Pinova Inc.) | Poly-$\alpha$-terpen | Erweichungstemperatur: 115 °C |
| | Dercolyte A115 | Poly-$\alpha$-terpen | Erweichungstemperatur: 115 °C |

(fortgesetzt)

|  | Rohstoff | Art | Charakteristik |
|---|---|---|---|
|  | (Les Derives Resiniques & Terpeniques) |  |  |
| Weichharzteil (a3) und/oder (b3) | Wingtack 10 (Cray Valley USA, LLC) | flüssiges C5-Kohlenwasserstoffharz |  |
| Additive (a4) und/oder (b4) | Irganox 1010 (BASF SE) | Primäres Alterungsschutzmittel |  |
| Microballons | Expancel 920 DU20 (Akzo Nobel Pulp and Performance Chemicals AB) |  |  |
| **) Herstellerangaben Kraton Performance Polymers, Inc. "Kraton Polymers - Product Guide", 2016 ***) Herstellerangaben Taiwan Synthetic Rubber Corp., Technisches Datenblatt Vector 4111A / Vector 4111N, 2014 SBS: Polystyrol-Polybutadien-Blockcopolymer SIS: Polystyrol-Polyisopren-Blockcopolymer PS: Polystyrol | | | |

Beispiel 1.1 (erfindungsgemäß)

|  |  |  | Typ | Anteil |
|---|---|---|---|---|
| Klebemasse A1 | Elastomerteil |  | Kraton D1102 AS Kraton D1118 ES | 42,0 Gew.-% 8,0 Gew.-% |
|  | Harzteil |  | Piccolyte A115 | 48,5 Gew.-% |
|  | Weichharzteil |  | -/- |  |
|  | Additive |  | Irganox 1010 | 0,5 Gew.-% |
|  | Microballons |  | Expancel 920 DU20 | 1,0 Gew.-% |
|  | Dicke* |  |  | 50 μm |
| Träger B | Elastomerteil |  | Kraton D1102 AS | 50,0 Gew.-% |
|  | Harzteil |  | Piccolyte A115 | 49,5 Gew.-% |
|  | Weichharzteil |  | -/- |  |
|  | Additive |  | Irganox 1010 | 0,5 Gew.-% |
|  | Dicke |  |  | 80 μm |
| Klebemasse A2 | Elastomerteil |  | Kraton D1102 AS Kraton D1118 ES | 42,0 Gew.-% 8,0 Gew.-% |
|  | Harzteil |  | Piccolyte A115 | 48,5 Gew.-% |
|  | Weichharzteil |  | -/- |  |
|  | Additive |  | Irganox 1010 | 0,5 Gew.-% |
|  | Microballons |  | Expancel 920 DU20 | 1,0 Gew.-% |
|  | Dicke* |  |  | 50 μm |

Beispiel 1.2 (erfindungsgemäß)

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Piccolyte A115 | 48,5 Gew.-% |
| | Weichharzteil | -/- | |
| | Additive | Irganox 1010 | 0,5 Gew.-% |
| | Microballons | Expancel 920 DU20 | 1,0 Gew.-% |
| | Dicke* | | 50 µm |
| Träger B | Elastomerteil | Kraton D1102 AS | 50,0 Gew.-% |
| | Harzteil | Piccolyte A115 | 49,5 Gew.-% |
| | Weichharzteil | -/- | |
| | Additive | Irganox 1010 | 0,5 Gew.-% |
| | Dicke | | 100 µm |
| Klebemasse A2 | Elastomerteil | Kraton D1102 AS<br>Kraton D1118 ES | 42,0 Gew.-%<br>8,0 Gew.-% |
| | Harzteil | Piccolyte A115 | 48,5 Gew.-% |
| | Weichharzteil | -/- | |
| | Additive | Irganox 1010 | 0,5 Gew.-% |
| | Microballons | Expancel 920 DU20 | 1,0 Gew.-% |
| | Dicke* | | 50 µm |

Beispiel 1.3 (erfindungsgemäß)

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Piccolyte A115 | 48,5 Gew.-% |
| | Weichharzteil | -/- | |
| | Additive | Irganox 1010 | 0,5 Gew.-% |
| | Microballons | Expancel 920 DU20 | 1,0 Gew.-% |
| | Dicke* | | 50 µm |
| Träger B | Elastomerteil | Kraton D1102 AS | 50,0 Gew.-% |
| | Harzteil | Piccolyte A115 | 49,5 Gew.-% |
| | Weichharzteil | -/- | |
| | Additive | Irganox 1010 | 0,5 Gew.-% |
| | Dicke | | 70 µm |

(fortgesetzt)

|  |  | Typ | Anteil |
|---|---|---|---|
| Klebemasse A2 | Elastomerteil | Kraton D1102 AS<br>Kraton D1118 ES | 42,0 Gew.-%<br>8,0 Gew.-% |
|  | Harzteil | Piccolyte A115 | 48,5 Gew.-% |
|  | Weichharzteil | -/- |  |
|  | Additive | Irganox 1010 | 0,5 Gew.-% |
|  | Microballons | Expancel 920 DU20 | 1,0 Gew.-% |
|  | Dicke* |  | 50 $\mu$m |

Beispiel 2.1 (Vergleich)

|  |  | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
|  | Harzteil | Dercolyte A115 | 45,5 Gew.-% |
|  | Weichharzteil | Wingtack 10 | 3,0 Gew.-% |
|  | Additive | Irganox 1010 | 0,5 Gew.-% |
|  | Microballons | Expancel 920 DU20 | 1,0 Gew.-% |
|  | Dicke* |  | 50 $\mu$m |
| Träger B | Elastomerteil | Kraton D1101 AS | 50,0 Gew.-% |
|  | Harzteil | Dercolyte A115 | 46,5 Gew.-% |
|  | Weichharzteil | Wingtack 10 | 3,0 Gew.-% |
|  | Additive | Irganox 1010 | 0,5 Gew.-% |
|  | Dicke |  | 30 $\mu$m |
| Klebemasse A2 | Elastomerteil | Kraton D1102 AS<br>Kraton D1118 ES | 42,0 Gew.-%<br>8,0 Gew.-% |
|  | Harzteil | Dercolyte A115 | 45,5 Gew.-% |
|  | Weichharzteil | Wingtack 10 | 3,0 Gew.-% |
|  | Additive | Irganox 1010 | 0,5 Gew.-% |
|  | Microballons | Expancel 920 DU20 | 1,0 Gew.-% |
|  | Dicke* |  | 50 $\mu$m |

Beispiel 2.2 (Vergleich)

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Dercolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 $\mu$m |
| Träger B | Elastomerteil | Kraton D1101 AS | 50,0 Gew.-% |
| | Harzteil | Dercolyte A115 | 46,5 Gew.-% |
| | Weichharzteil | Wingtack 10 | 3,0 Gew.-% |
| | Additive | Irganox 1010 | 0,5 Gew.-% |
| | Dicke | | 50 $\mu$m |
| Klebemasse A2 | Elastomerteil | Kraton D1102 AS<br>Kraton D1118 ES | 42,0 Gew.-%<br>8,0 Gew.-% |
| | Harzteil | Dercolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 $\mu$m |

Beispiel 2.3 (erfindungsgemäß)

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Dercolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 $\mu$m |
| Träger B | Elastomerteil | Kraton D1101 AS | 50,0 Gew.-% |
| | Harzteil | Dercolyte A115 | 46,5 Gew.-% |
| | Weichharzteil | Wingtack 10 | 3,0 Gew.-% |
| | Additive | Irganox 1010 | 0,5 Gew.-% |
| | Dicke | | 80 $\mu$m |

(fortgesetzt)

| | | Typ | Anteil |
|---|---|---|---|
| Klebemasse A2 | Elastomerteil | Kraton D1102 AS<br>Kraton D1118 ES | 42,0 Gew.-%<br>8,0 Gew.-% |
| | Harzteil | Dercolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 µm |

Beispiel 2.4 (erfindungsgemäß)

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Dercolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 µm |
| Träger B | Elastomerteil | Kraton D1101 AS | 50,0 Gew.-% |
| | Harzteil | Dercolyte A115 | 46,5 Gew.-% |
| | Weichharzteil | Wingtack 10 | 3,0 Gew.-% |
| | Additive | Irganox 1010 | 0,5 Gew.-% |
| | Dicke | | 100 µm |
| Klebemasse A2 | Elastomerteil | Kraton D1102 AS<br>Kraton D1118 ES | 42,0 Gew.-%<br>8,0 Gew.-% |
| | Harzteil | Dercolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 µm |

Beispiel 3.1 (Vergleich)

| | | | Typ | Anteil |
|---|---|---|---|---|
| Klebemasse A1 | Elastomerteil | | Kraton D1102 AS<br>Kraton D1118 ES | 42,0 Gew.-%<br>8,0 Gew.-% |
| | Harzteil | | Piccolyte A115 | 45,5 Gew.-% |
| | Weichharzteil | | Wingtack 10 | 3,0 Gew.-% |
| | Additive | | Irganox 1010 | 0,5 Gew.-% |
| | Microballons | | Expancel 920 DU20 | 1,0 Gew.-% |
| | Dicke* | | | 50 $\mu$m |
| Träger B | Polyurethan-Folie | | Polyethylenbeschichtetes thermoplastisches Polyurethan | |
| | Dicke | | | 80 $\mu$m |
| Klebemasse A2 | Elastomerteil | | Kraton D1102 AS<br>Kraton D1118 ES | 42,0 Gew.-%<br>8,0 Gew.-% |
| | Harzteil | | Piccolyte A115 | 45,5 Gew.-% |
| | Weichharzteil | | Wingtack 10 | 3,0 Gew.-% |
| | Additive | | Irganox 1010 | 0,5 Gew.-% |
| | Microballons | | Expancel 920 DU20 | 1,0 Gew.-% |
| | Dicke* | | | 50 $\mu$m |

Beispiel 4.1 (Vergleich)

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Dercolyte A115 | 46,5 Gew.-% |
| | Weichharzteil | Wingtack 10 | 3,0 Gew.-% |
| | Additive | Irganox 1010 | 0,5 Gew.-% |
| | Microballons | -/- | ungeschäumt |
| | Dicke | | 50 $\mu$m |
| Träger B | Elastomerteil | Kraton D1102 AS<br>Kraton D1118 ES | 42,0 Gew.-%<br>8,0 Gew.-% |
| | Harzteil | Dercolyte A115 | 46,5 Gew.-% |
| | Weichharzteil | Wingtack 10 | 3,0 Gew.-% |
| | Additive | Irganox 1010 | 0,5 Gew.-% |
| | Dicke | | 50 $\mu$m |
| Klebemasse A2 | Elastomerteil | Kraton D1102 AS<br>Kraton D1118 ES | 42,0 Gew.-%<br>8,0 Gew.-% |
| | Harzteil | Dercolyte A115 | 46,5 Gew.-% |
| | Weichharzteil | Wingtack 10 | 3,0 Gew.-% |
| | Additive | Irganox 1010 | 0,5 Gew.-% |
| | Microballons | -/- | ungeschäumt |
| | Dicke | | 50 $\mu$m |

Beispiel 4.2 (Vergleich)

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 μm |
| Träger B | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 μm |
| Klebemasse A2 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 μm |

Beispiel 5.1 (Vergleich)

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 μm |
| Träger B | Elastomerteil | Kraton D1102 AS<br>Kraton D1118 ES | 42,0 Gew.-%<br>8,0 Gew.-% |
| | Harzteil | Dercolyte A115 | 46,5 Gew.-% |
| | Weichharzteil | Wingtack 10 | 3,0 Gew.-% |
| | Additive | Irganox 1010 | 0,5 Gew.-% |
| | Dicke | | 80 μm |

(fortgesetzt)

| | | Typ | Anteil |
|---|---|---|---|
| Klebemasse A2 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 $\mu$m |

Beispiel 6.1 (erfindungsgemäß)

| | | Typ | Anteil |
|---|---|---|---|
| Klebemasse A1 | Elastomerteil | Kraton D1116 AT<br>Kraton D1118 ES | 18,0 Gew.-%<br>30,0 Gew.-% |
| | Harzteil | Piccolyte A115 | 47,5 Gew.-% |
| | Weichharzteil | Wingtack 10 | 1,0 Gew.-% |
| | Additive | Irganox 1010 | 0,5 Gew.-% |
| | Microballons | Expancel 920 DU20 | 1,0 Gew.-% |
| | Dicke* | | 25 $\mu$m |
| Träger B | Elastomerteil | Kraton D1102 AS | 50,0 Gew.-% |
| | Harzteil | Piccolyte A115 | 48,5 Gew.-% |
| | Weichharzteil | Wingtack 10 | 1,0 Gew.-% |
| | Additive | Irganox 1010 | 0,5 Gew.-% |
| | Dicke | | 100 $\mu$m |
| Klebemasse A2 | Elastomerteil | Kraton D1116 AT<br>Kraton D1118 ES | 18,0 Gew.-%<br>30,0 Gew.-% |
| | Harzteil | Piccolyte A115 | 47,5 Gew.-% |
| | Weichharzteil | Wingtack 10 | 1,0 Gew.-% |
| | Additive | Irganox 1010 | 0,5 Gew.-% |
| | Microballons | Expancel 920 DU20 | 1,0 Gew.-% |
| | Dicke* | | 25 $\mu$m |

Beispiel 6.2 (erfindungsgemäß)

| | | Typ | Anteil |
|---|---|---|---|
| Klebemasse A1 | Elastomerteil | Kraton D1116 AT<br>Kraton D1118 ES | 18,0 Gew.-%<br>30,0 Gew.-% |
| | Harzteil | Piccolyte A115 | 47,5 Gew.-% |
| | Weichharzteil | Wingtack 10 | 1,0 Gew.-% |
| | Additive | Irganox 1010 | 0,5 Gew.-% |
| | Microballons | Expancel 920 DU20 | 1,0 Gew.-% |
| | Dicke* | | 35 μm |
| Träger B | Elastomerteil | Kraton D1102 AS | 50,0 Gew.-% |
| | Harzteil | Piccolyte A115 | 48,5 Gew.-% |
| | Weichharzteil | Wingtack 10 | 1,0 Gew.-% |
| | Additive | Irganox 1010 | 0,5 Gew.-% |
| | Dicke | | 80 μm |
| Klebemasse A2 | Elastomerteil | Kraton D1116 AT<br>Kraton D1118 ES | 18,0 Gew.-%<br>30,0 Gew.-% |
| | Harzteil | Piccolyte A115 | 47,5 Gew.-% |
| | Weichharzteil | Wingtack 10 | 1,0 Gew.-% |
| | Additive | Irganox 1010 | 0,5 Gew.-% |
| | Microballons | Expancel 920 DU20 | 1,0 Gew.-% |
| | Dicke* | | 35 μm |

Beispiel 7.1 (Vergleich):

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 μm |
| Träger B | Elastomerteil | Vector 4111N | 50,0 Gew.-% |
| | Harzteil | Dercolyte A115 | 46,5 Gew.-% |
| | Weichharzteil | Wingtack 10 | 3,0 Gew.-% |
| | Additive | Irganox 1010 | 0,5 Gew.-% |
| | Dicke | | 50 μm |

(fortgesetzt)

| | | Typ | Anteil |
|---|---|---|---|
| Klebemasse A2 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 µm |

Beispiel 7.2 (Vergleich):

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 µm |
| Träger B | Elastomerteil | Vector 4111N | 50,0 Gew.-% |
| | Harzteil | Piccolyte A115 | 46,5 Gew.-% |
| | Weichharzteil | Wingtack 10 | 3,0 Gew.-% |
| | Additive | Irganox 1010 | 0,5 Gew.-% |
| | Dicke | | 80 µm |
| Klebemasse A2 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 µm |

Beispiel 7.3 (Vergleich):

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 $\mu$m |
| Träger B | Elastomerteil | Kraton D1165 PT | 50,0 Gew.-% |
| | Harzteil | Dercolyte A115 | 46,5 Gew.-% |
| | Weichharzteil | Wingtack 10 | 3,0 Gew.-% |
| | Additive | Irganox 1010 | 0,5 Gew.-% |
| | Dicke | | 50 $\mu$m |
| Klebemasse A2 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 $\mu$m |

Beispiel 7.4 (Vergleich):

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke | | 50 $\mu$m |
| Träger B | Elastomerteil | Kraton D1165 PT | 50,0 Gew.-% |
| | Harzteil | Dercolyte A115 | 46,5 Gew.-% |
| | Weichharzteil | Wingtack 10 | 3,0 Gew.-% |
| | Additive | Irganox 1010 | 0,5 Gew.-% |
| | Dicke | | 80 $\mu$m |

(fortgesetzt)

| | | Typ | Anteil |
|---|---|---|---|
| Klebemasse A2 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 $\mu$m |

Beispiel 8.1 (Vergleich):

| | | Typ | Anteil |
|---|---|---|---|
| Klebemasse A1 | Elastomerteil | Kraton D1102 AS<br>Kraton D1118 ES | 42,0 Gew.-%<br>8,0 Gew.-% |
| | Harzteil | Dercolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 $\mu$m |
| Träger B | Elastomerteil | Kraton D1102 AS | 99,5 Gew.-% |
| | Harzteil | -/- | |
| | Weichharzteil | | |
| | Additive | Irganox 1010 | 0,5 Gew.-% |
| | Dicke | | 50 $\mu$m |
| Klebemasse A2 | Elastomerteil | Kraton D1102 AS<br>Kraton D1118 ES | 42,0 Gew.-%<br>8,0 Gew.-% |
| | Harzteil | Piccolyte A115 | 45,5 Gew.-% |
| | Weichharzteil | Wingtack 10 | 3,0 Gew.-% |
| | Additive | Irganox 1010 | 0,5 Gew.-% |
| | Microballons | Expancel 920 DU20 | 1,0 Gew.-% |
| | Dicke* | | 50 $\mu$m |

Beispiel 8.2 (Vergleich):

| | | Typ | Anteil | |
|---|---|---|---|---|
| Klebemasse A1 | Elastomerteil | Kraton D1102 AS<br>Kraton D1118 ES | 42,0 Gew.-%<br>8,0 Gew.-% | |
| | Harzteil | Piccolyte A115 | 45,5 Gew.-% | |
| | Weichharzteil | Wingtack 10 | 3,0 Gew.-% | |
| | Additive | Irganox 1010 | 0,5 Gew.-% | |
| | Microballons | Expancel 920 DU20 | 1,0 Gew.-% | |
| | Dicke* | | 50 μm | |
| Träger B | Elastomerteil | Kraton D1102 AS | 99,5 Gew.-% | |
| | Harzteil | -/- | | |
| | Weichharzteil | -/- | | |
| | Additive | Irganox 1010 | 0,5 Gew.-% | |
| | Dicke | | 80 μm | |
| Klebemasse A2 | Elastomerteil | Kraton D1102 AS<br>Kraton D1118 ES | 42,0 Gew.-%<br>8,0 Gew.-% | |
| | Harzteil | Piccolyte A115 | 45,5 Gew.-% | |
| | Weichharzteil | Wingtack 10 | 3,0 Gew.-% | |
| | Additive | Irganox 1010 | 0,5 Gew.-% | |
| | Microballons | Expancel 920 DU20 | 1,0 Gew.-% | |
| | Dicke* | | 50 μm | |
| | Diblock-Anteil Trägerschicht | Klebkraft | Schockbeständigkeit | Reißerbeständigkeit |
| Beispiel 1.1 | 17 % | 10,3 N/cm | 633 mJ | 0/3 @ 800 mm/min |
| Beispiel 1.2 | 17 % | 10,8 N/cm | 603 mJ | 0/3 @ 800 mm/min |
| Beispiel 1.3 | 17 % | 9,8 N/cm | 662 mJ | 0/3 @ 800 mm/min |
| Beispiel 2.1 | 16 % | 9,5 N/cm | 589 mJ | 0/3 @ 500 mm/min<br>3/3 @ 700 mm/min |
| Beispiel 2.2 | 16% | 9,5 N/cm | 618 mJ | 2/3 @ 500 mm/min<br>3/3 @ 700 mm/min |
| Beispiel 2.3 | 16 % | 9,8 N/cm | 662 mJ | 0/3 @ 800 mm/min |
| Beispiel 2.4 | 16 % | 10,8 N/cm | 662 mJ | 0/3 @ 800 mm/min |
| Beispiel 3.1 | -/- | 7,6 N/cm | 559 mJ | 0/3 @ 300 mm/min<br>3/3 @ 500 mm/min |
| Beispiel 4.1 | 26,8 % | 13,6 N/cm | 383 mJ | 0/3 @ 800 mm/min |
| Beispiel 4.2 | 26,8 % | 10,9 N/cm | 662 mJ | 3/3 @ 100 mm/min |
| Beispiel 5.1 | 26,8 % | 10,3 N/cm | 647 mJ | 3/3 @ 300 mm/min |
| Beispiel 6.1 | 17 % | 10,6 N/cm | 740 mJ | 0/3 @ 800 mm/min |
| Beispiel 6.2 | 17 % | 11,4 N/cm | 840 mJ | 0/3 @ 800 mm/min |

(fortgesetzt)

| | Diblock-Anteil Trägerschicht | Klebkraft | Schockbeständigkeit | Reißerbeständigkeit |
|---|---|---|---|---|
| Beispiel 7.1 | < 1 % | 10,3 N/cm | 750 mJ | 3/3 @ 500 mm/min |
| Beispiel 7.2 | < 1 % | 10,6 N/cm | 750 mJ | 3/3 @ 500 mm/min |
| Beispiel 7.3 | 20 % | 11,4 N/cm | 589 mJ | 3/3 @ 500 mm/min |
| Beispiel 7.4 | 20 % | 14,1 N/cm | 574 mJ | 3/3 @ 500 mm/min |
| Beispiel 8.1 | 17 % | 4,6 N/cm | 353 mJ | 0/3 @ 800 mm/min |
| Beispiel 8.2 | 17 % | 2,3 N/cm | 338 mJ | 0/3 @ 800 mm/min |

Beispiele 1.1, 1.2 und 1.3 zeigen, dass die erfindungsgemäße Gestaltung von Selbstklebestreifen die gestellten Anforderungen an die Leistungsfähigkeit erfüllen. Die vorteilhafte Beständigkeit gegen Schockeinwirkung lässt sich auf die geschäumten Klebemasseschichten zurückführen. Die Beispielprodukte lassen sich durch erfindungsgemäße Konzeption der Trägerschicht unter sehr herausfordernden Bedingungen (Ablösewinkel von ca. 180° um zwei Kanten selbst bei einer hohen Ablösegeschwindigkeit von 800 mm/min) aus einem Testklebeverbund herauslösen.

Beispiele 2.1, 2.2, 2.3 und 2.4 führen den Einfluss der Dicke der Trägerschicht vor Augen. Trägerdicken von 30 μm oder 50 μm bieten nicht die verbesserte Reißerbeständigkeit im Ablöseprozess. Bei 700 mm/min reißen bereits alle drei Teststreifen. Wählt man Trägerdicken von 80 μm oder 100 μm ist ein Ablösen auch bei 800 mm/min möglich.

Eine 80 μm dicke Polyurethanfolie (Beispiel 3.1) als Trägerschicht ist für viele Anwendungen geeignet. Jedoch erlaubt sie ein Ablösen unter den hier gestellten sehr herausfordernden Ablösegeschwindigkeiten nicht.

Beispiele 4.1 und 4.2 zeigen auf, dass ein 150 μm vollständig ungeschäumter Selbstklebestreifen (Beispiel 4.1) sehr gut auch unter den hier angewendeten schwierigen Ablösebedingungen aus dem Testverbund gelöst werden kann. Jedoch ist ohne die Schäumung die Schockresistenz nicht auf dem geforderten Niveau. Ein komplett geschäumter Selbstklebestreifen dagegen weist zwar hervorragende Schockresistenz auf, bietet allerdings keine ausreichende Reißerbeständigkeit im Ablösetest.

Aus Beispiel 5.1 ist ersichtlich, dass eine Zusammensetzung für die Trägerschicht, die im Hinblick auf den Diblockanteil im Elastomerteil (b1) nicht erfindungsgemäß ist, die gestellten Anforderungen an Ablösbarkeit unter den hier gestellten sehr herausfordernden Bedingungen nicht erfüllt.

Beispiele 6.1 und 6.2 zeigen weitere erfindungsgemäße Produktausgestaltungen mit den entsprechenden vorteilhaften Leistungseigenschaften Klebkraft, Schockresistenz und Ablöseverhalten. Die Schockresistenz ist dabei sehr hoch und dies, obwohl die geschäumten Klebemasseschichten lediglich eine Dicke von 25 μm beziehungsweise 35 μm aufweisen.

In den Beispielen 7.1, 7.2, 7.3 und 7.4 sind Ergebnisse zu einer Untersuchung mit einer anderen Elastomerbasis für die Trägerschicht zusammengefasst. Hier wurde statt mit Polystyrol-Polybutadien-Blockcopolymeren mit Polystyrol-Polyisopren-Blockcopolymeren formuliert. Das in den Beispielen 7.1 und 7.2 verwendete Vector 4111N weist einen Polystyrol-Anteil von 18 % auf. Dies erweist sich für ausreichende Ablösbarkeit als zu gering, auch bei einer Trägerschichtdicke von 80 μm (Beispiel 7.2). In den Beispielen 7.3 und 7.4 wurde mit Kraton D1165 PT ein Polystyrol-Polyisopren-Blockcopolymer verwendet, das einen Polystyrol-Anteil von 30 % enthält. Eine Trägerschicht mit einer Dicke von 50 μm erweist sich erneut als zu dünn, um die erforderliche Reißerbeständigkeit für den Ablöseprozess zu erfüllen. Wählt man eine erfindungsgemäße Trägerschichtdicke von 80 μm, dann zeigt sich, dass ein Diblockanteil im Elastomerteil von 20 % nicht mehr ausreichend ist, um die geforderte Ablösbarkeit unter den sehr herausfordernden Bedingungen zu erreichen. Klebkraft und Schockresistenz liegen für diese erfindungsgemäße Muster auf dem jeweils geforderten Niveau.

Schließlich führen die Beispiele 8.1 und 8.2 vor Augen, dass mit einer Trägerschicht, die zwar aus einem Elastomer gebildet wird aber keine Harze enthält, die in den äußeren Haftklebeschichten enthalten sind, kein ausreichend stabiler Mehrschichtverbund erhalten wird. Zwar werden gute Ablöseeigenschaften gefunden. Jedoch verliert der Selbstklebestreifen innerhalb kurzer Zeit deutlich an Klebkraft, was zumindest teilweise auf eine Migration von Klebharz und Weichharz aus den Haftklebeschichten in die Trägerschicht zurückgeführt werden kann.

Prüfmethoden

Alle Messungen wurden, sofern nichts anderes angegeben ist, bei 23 °C und 50 % rel. Luftfeuchtigkeit durchgeführt.

*Test I - Glasübergangstemperatur (DSC)*

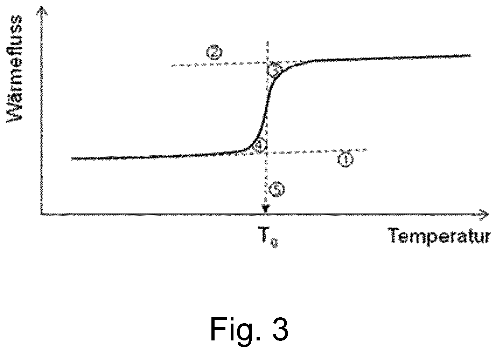

Die Glasübergangstemperatur von Polymerblöcken in Blockcopolymeren wird mittels dynamischer Scanning Kalorimetrie (DSC) bestimmt. Dazu werden ca. 5 mg der unbehandelten Blockcopolymerproben in ein Aluminiumtiegelchen (Volumen 25 µL) eingewogen und mit einem gelochten Deckel verschlossen. Zur Messung wird ein DSC 204 F1 der Firma Netzsch verwendet und unter Stickstoff zur Inertisierung gearbeitet. Die Probe wird zunächst auf -150 °C abgekühlt, mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt. Die Glasübergangstemperatur wird folgendermaßen ausgewertet (siehe dazu Figur 3). An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur.

*Test II - Molmasse (GPC)*

(i) Peakmolmasse von einzelnen Blockcopolymermoden

GPC bietet sich als messtechnisches Verfahren zur Bestimmung der Molmasse einzelner Polymermoden in Gemischen verschiedener Polymere an. Für die im Sinne dieser Erfindung einsetzbaren durch lebende anionische Polymerisation hergestellten Blockcopolymere sind die Molmassenverteilungen typischerweise ausreichend eng, so dass Polymermoden, die sich Triblockcopolymeren, Diblockcopolymeren oder Multiblockcopolymeren zuordnen lassen, ausreichend voneinander aufgelöst im Elugramm auftreten. Es lässt sich dann die Peakmolmasse für die einzelnen Polymermoden aus den Elugrammen ablesen.

Peakmolmassen $M_P$ werden mittels Gelpermeationschromatographie (GPC) bestimmt. Als Eluent wird THF eingesetzt. Die Messung erfolgt bei 23 °C. Als Vorsäule wird PSS-SDV, 5 µ, $10^3$ Å, ID 8,0 mm × 50 mm verwendet. Zur Auftrennung werden die Säulen PSS-SDV, 5 µ, $10^3$ Å sowie $10^4$ Å und $10^6$ Å mit jeweils ID 8,0 mm × 300 mm eingesetzt. Die Probenkonzentration beträgt 4 g/l, die Durchflussmenge 1,0 ml pro Minute. Es wird gegen PS Standards gemessen ($\mu$ = µm; 1 Å = $10^{-10}$ m).

(ii) gewichtsmittlere Molmasse insbesondere von Klebharzen

Das gewichtsmittlere Molekulargewicht $M_w$ (M.W.) wird mittels Gelpermeationschromatographie (GPC) bestimmt. Als Eluent wird THF eingesetzt. Die Messung erfolgt bei 23 °C. Als Vorsäule wird PSS-SDV, 5 µ, $10^3$ Å, ID 8,0 mm × 50 mm verwendet. Zur Auftrennung werden die Säulen PSS-SDV, 5 µ, $10^3$ Å sowie $10^4$ Å und $10^6$ Å mit jeweils ID 8,0 mm × 300 mm eingesetzt. Die Probenkonzentration beträgt 4 g/l, die Durchflussmenge 1,0 ml pro Minute. Es wird gegen PS Standards gemessen ($\mu$ = µm; 1 Å = $10^{-10}$ m).

*Test III - DACP*

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5 %, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99 %, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

*Test IV - MMAP*

In ein trockenes Probenglas werden 5,0 g Testsubstanz (das zu untersuchende Klebharzmuster) eingewogen und mit 10 mL trockenem Anilin (CAS [62-53-3], ≥ 99,5 %, Sigma-Aldrich #51788 oder vergleichbar) und 5 mL trockenem Methylcyclohexan (CAS [108-87-2], ≥ 99 %, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

*Test V - Klebharzerweichungstemperatur*

Die Klebharzerweichungstemperatur wird nach der einschlägigen Methodik durchgeführt, die als Ring & Ball bekannt ist und nach ASTM E28 standardisiert ist.

*Test VI - Schmelzviskosität*

Zur Bestimmung der Schmelzviskosität der Weichharze wird ein Schubspannungssweep in einem schubspannungsgeregelten DSR 200 N Rheometer der Firma Rheometrics Scientific in Rotation durchgeführt. Es kommt ein Kegel/Platte-Messsystem mit einem Durchmesser von 25 mm (Kegelwinkel 0,1002 rad) zur Anwendung, der Messkopf ist luftgelagert und geeignet für Normalkraftmessungen. Der Spalt beträgt 0,053 mm und die Messtemperatur 25 °C. Die Frequenz wird von 0,002 Hz bis 200 Hz variiert und die Schmelzviskosität bei 1 Hz registriert.
Die mechanischen und klebtechnischen Daten wurden wie folgt ermittelt:

*Test VII - Durchschlagzähigkeit; z-Ebene (DuPont-Test)*

Aus dem zu untersuchenden Klebeband wurde eine quadratische, rahmenförmige Probe ausgeschnitten (Außenmaße 33 mm × 33 mm; Stegbreite 2,0 mm; Innenmaße (Fensterausschnitt) 29 mm × 29 mm). Diese Probe wurde auf einen Polycarbonat-(PC)-Rahmen (Außenmaße 45 mm × 45 mm; Stegbreite 10 mm; Innenmaße (Fensterausschnitt) 25 mm × 25 mm; Dicke 3 mm) geklebt. Auf der anderen Seite des doppelseitigen Klebebands wurde ein PC-Fenster von 35 mm × 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 mm². Die Verklebung wurde für 5 s mit 248 N gepresst und für 24 Stunden konditioniert bei 23 °C / 50 % relativer Feuchte gelagert.
Unmittelbar nach der Lagerung wurde der Klebeverbund aus PC-Rahmen, Klebeband und PC-Fenster mit den überstehenden Kanten des PC-Rahmens derart in eine Probenhalterung gespannt, dass der Verbund waagerecht ausgerichtet war. Dabei liegt der PC-Rahmen an den überstehenden Kanten auf der Probenhalterungen plan auf, so dass das PC-Fenster unterhalb des PC-Rahmens frei schwebend (durch das Klebebandmuster gehalten) vorlag. Die Probenhalterung wurde anschließend in die vorgesehene Aufnahme des "DuPont Impact Tester" zentrisch eingesetzt. Der 150 g schwere Schlagkopf wurde so eingesetzt, dass die kreisförmige Aufschlaggeometrie mit dem Durchmesser 24 mm auf die von oben frei zugängliche Fläche des PC-Fensters zentrisch und bündig auflag.
Auf den so angeordneten Verbund aus Probenhalterung, Probe und Schlagkopf wurde senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wurde in 5 cm Schritten so lange erhöht, bis die eingebrachte Stoßenergie die Probe durch die Durchschlagbelastung zerstört und das PC-Fenster sich vom PC-Rahmen löste.
Um Versuche mit unterschiedlichen Proben vergleichen zu können, wurde die Energie wie folgt berechnet:

$$E \ [J] = \text{Höhe [m]*Masse Gewicht [kg]*9,81 kg/m*s}^2$$

Es wurden fünf Proben pro Produkt getestet und der Energiemittelwert als Kennzahl für die Durchschlagzähigkeit angegeben.

*Test VIII - Klebkraft*

Die Bestimmung der Klebkraft (gemäß AFERA 5001) wird wie folgt durchgeführt. Als definierter Haftgrund wird eine polierte Stahlplatte mit einer Stärke von 2 mm eingesetzt. Das zu untersuchende verklebbare Flächenelement (das rückseitig mit einer 36 μm geätzten PET-Folie als Stützfolie ausgerüstet ist) wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

*Test IX - Reißerbeständigkeit (Ablösetest)*

Um besonders herausfordernde Ablösebedingungen reproduzierbar für die Prüfung der Teststreifen zu schaffen, wurde ein maschinelles Verfahren gewählt, bei dem ein Testklebestreifen unter einem Ablösewinkel von etwa 180° durch dehnende Verstreckung aus einem Klebverbund herausgelöst wird. Je höher die Ablösegeschwindigkeit unter dieser bereits äußerst anspruchsvoll gewählten Ablösegeometrie desto höher ist das Risiko des Reißens während des dehnenden Verstreckens im Ablöseprozess. Der Test wird an einem Zugprüfungsgerät (Firma Zwick) durchgeführt.

Pro Muster werden drei Teststrips ausgestanzt. Die Geometrie der einzelnen Strips weist eine Länge von 5 cm und eine Breite von 12 mm auf. Das eine Ende der Teststrips weist eine Verjüngung in Form eines gleichschenkligen Dreiecks (Höhe 1 cm) auf.

Mit diesen Teststrips werden Testverbünde hergestellt, indem zwei Testplatten (Polyethylenterephthalat Typ Centrolyte PET-P, Firma ThyssenKrupp Plastics GmbH; 3 mm dick; gesägte, ungeschliffene Kanten), die zuvor mit Isopropanol gereinigt und anschließend für 20 min getrocknet wurden, miteinander verklebt wurden. Dazu wurde ein Teststrip derartig zunächst auf eine der PET-Platten geklebt, dass das sich nicht verjüngende Ende des Strips einen Überstand über die Testplattenkante von 1 cm aufweist. Der zweite Liner wird entfernt und die zweite PET-Platte verklebt. Hierzu wird fünfmal mit einer 4 kg Rolle auf dem Verbund hin und her gerollt (Geschwindigkeit: 1 m/min). Die zweite Platte wird so positioniert, dass ein Teil dieser Platte über die Kante der ersten Platte herausragt, so dass der überstehende Teil der zweiten Platte in den unteren festen Teil der Zugprüfmaschine eingespannt werden kann. Bei der Herstellung des Verbunds wird Sorge getragen, dass das an der Kante der ersten Platte überstehende Ende des Strips nicht auf dem überragenden Teil der zweiten Platte verklebt. Der Verbund wird in den unteren festen Teil der Zugprüfmaschine eingespannt. Der überstehende Teil des Klebebandes wird um die Schmalseite der ersten Platte herum geführt und in den beweglichen oberen Teil der Zugprüfmaschine eingespannt. Mit der Geschwindigkeit $\times$ wird das Klebeband aus dem Verbund unter einem Winkel von etwa 180° herausgestrippt.

Diese Messung wird pro Muster an drei Einzelproben je Testgeschwindigkeit durchgeführt. Es wird die Anzahl der nicht gerissenen Teststreifen für eine voreingestellte Abzugsgeschwindigkeit notiert. Es bedeutet "0/3", dass von drei Teststreifen keiner bei der angegebenen Abzugsgeschwindigkeit gerissen ist. Es bedeutet "3/3", dass alle drei Teststreifen bei der angegebenen Abzugsgeschwindigkeit gerissen sind.

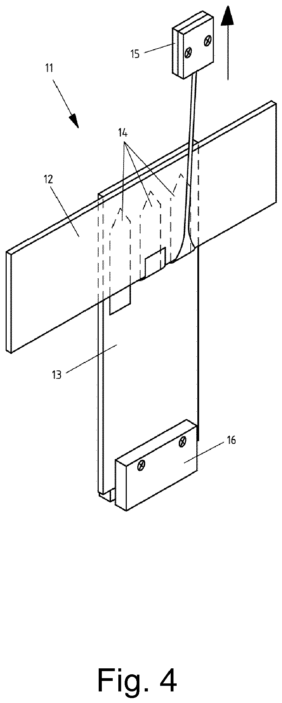

In der Figur 4 ist der prinzipielle Aufbau des Tests gezeigt. Dabei bedeuten:

| | |
|---|---|
| 11 | Testverbund |
| 12 | Testplatte |
| 13 | Testplatte |
| 14 | Teststreifen |
| 15 | Einspannung (verschiebbar) |
| 16 | Einspannung (fest) |

**Patentansprüche**

**1.** Haftklebestreifen, der sich durch dehnendes Verstrecken im Wesentlichen in der Verklebungsebene rückstands- und zerstörungsfrei wieder ablösen lässt, enthaltend zumindest eine Klebemassenschicht, die mit Mikroballons geschäumt ist, und zumindest einen Träger B,

wobei

die die zumindest eine Klebemassenschicht bildende Haftklebemasse A einen Elastomerteil (a1) enthält auf Basis zumindest einer Sorte eines Polyvinylaromaten-Polydien-Blockcopolymers, wobei der Elastomerteil (a1) zu mindestens 90 Gew.-% aus Polyvinylaromaten-Polydien-Blockcopolymeren besteht, der Gehalt an Polyvinylaromaten an den Polyvinylaromat-Polydien-Blockcopolymeren bei mindestens 12 Gew.-% und höchstens 35 Gew.-% liegt und der Anteil des Elastomerteils (a1) bezogen auf die Gesamtklebemasse A bei mindestens 40 Gew.-% und höchstens 55 Gew.-% liegt, und

einen Klebharzteil (a2) enthält mit zumindest einer Sorte eines Klebharzes, wobei der Klebharzteil (a2) zu mindestens 90 Gew.-% aus mit den Polydien-Blöcken verträglichen und mit den Polyvinylaromaten-Blöcken unverträglichen Kohlenwasserstoffharzen besteht, die ausgewählt sind aus der Gruppe bestehend aus hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5/C_9$- oder $C_9$-Monomerströmen, Polyterpenharze auf Basis von $\alpha$-Pinen und/oder ß-Pinen und/oder $\delta$-Limonen sowie Mischungen hiervon und der Anteil des Klebharzteils (a2) bezogen auf die Gesamtklebemasse A bei mindestens 40 Gew.-% und höchstens 60 Gew.-% liegt, sowie optional einen Weichharzteil (a3) enthält, wobei der Weichharzteil (a3) bezogen auf die Gesamtklebemasse bei 0 Gew.-% bis höchstens 5 Gew.-% liegt, und

optional weitere Additive (a4) enthält

wobei der Anteil an Mikroballons bezogen auf die Gesamtklebemasse bei mindestens 0,5 Gew.-% und höchstens 2,5 Gew.-% liegt,

wobei die Dicke der zumindest einen geschäumten Haftklebemasseschicht A bei mindestens 20 $\mu$m und höchstens 75 $\mu$m liegt,

und wobei

der zumindest eine Träger B

einen Elastomerteil (b1) enthält auf Basis zumindest eine Sorte eines Polyvinylaromaten-Polydien-Blockcopolymers, wobei der Elastomerteil (b1) zu mindestens 90 Gew.-% aus Polyvinylaromaten-Polydien-Blockcopolymeren besteht, der Gehalt an Polyvinylaromaten an den Polyvinylaromat-Polydien-Blockcopolymeren bei mindestens 20 Gew.-% und höchstens 45 Gew.-% liegt, innerhalb des Elastomerteils der Anteil an zumindest einem Triblockcopolymer oder Multiblockcopolymer (linear oder radial) bei mindestens 80 Gew.-% liegt, wobei die Molmasse des Triblockcopolymers oder Multiblockcopolymers (linear oder radial) bestimmt nach GPC gemäß Test II der Beschreibung bei mindestens 85 000 g/mol liegt,

der Anteil an Diblockcopolymeren bei unter 20 Gew.-% liegt und der Anteil an Elastomeren (b1) bezogen auf die Formulierung der Trägerschicht B bei mindestens 40 Gew.-% und höchstens 60 Gew.-% liegt, und

einen Klebharzteil (b2) enthält mit zumindest einer Sorte eines Klebharzes, wobei der Klebharzteil (b2) zu mindestens 90 Gew.-% aus mit den Polydien-Blöcken verträglichen und mit den Polyvinylaromaten-Blöcken unverträglichen Kohlenwasserstoffharzen besteht, die ausgewählt sind aus der Gruppe bestehend aus hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5/C_9$- oder Cg-Monomerströmen, Polyterpenharze auf Basis von $\alpha$-Pinen und/oder $\beta$-Pinen und/oder $\delta$-Limonen sowie Mischungen hiervon und der Anteil des Klebharzteils (b2) bezogen auf die Gesamtformulierung der Trägerschicht B bei mindestens 40 Gew.-% und höchstens 60 Gew.-% liegt, sowie

optional einen Weichharzteil (b3), wobei der Weichharzanteil (b3) bezogen auf die Gesamtformulierung der Trägerschicht bei 0 Gew.-% bis höchstens 5 Gew.-% liegt, und optional

weitere Additive (b4) enthält,

wobei die Dicke der Trägerschicht B bei mindestens 70 $\mu$m und höchstens 150 $\mu$m liegt, wobei die Dichte der Trägerschicht B mindestens 950 g/cm$^3$ beträgt.

2. Haftklebstreifen nach Anspruch 1,
**dadurch gekennzeichnet, dass**
der Haftklebestreifen aus einer oder mehreren aus der Haftklebemasse A bestehenden Klebemassenschichten und aus einer oder mehreren Trägerschichten B besteht.

3. Haftklebstreifen nach zumindest einem der Ansprüche 1 bis 2,
**dadurch gekennzeichnet, dass**
der Haftklebestreifen ausschließlich aus den aus der Haftklebemasse A gebildeten Klebemassenschichten und den Trägerschichten B besteht.

4. Haftklebstreifen nach zumindest einem der Ansprüche 1 bis 3,
**dadurch gekennzeichnet, dass**
die die zumindest eine Klebemassenschicht bildende Haftklebemasse A einen Elastomerteil (a1) auf Basis zumindest einer Sorte eines Polyvinylaromaten-Polydien-Blockcopolymers, wobei der Elastomerteil (a1) zu mindestens 90 Gew.-% aus Polyvinylaromaten-Polydien-Blockcopolymeren besteht, der Gehalt an Polyvinylaromaten an den Polyvinylaromat-Polydien-Blockcopolymeren bei mindestens 20 Gew.-% und höchstens 32 Gew.-% liegt und der Anteil des Elastomerteils (a1) bezogen auf die Gesamtklebemasse A bei mindestens 45 Gew.-% liegt.

5. Haftklebstreifen nach zumindest einem der vorhergehenden Ansprüche,
**dadurch gekennzeichnet, dass**
der Elastomerteil (a1) zu mindestens 90 Gew.-% aus Polyvinylaromaten-Polybutadien-Blockcopolymeren besteht.

6. Haftklebstreifen nach zumindest einem der vorhergehenden Ansprüche,
**dadurch gekennzeichnet, dass**
die die zumindest eine Klebemassenschicht bildende Haftklebemasse A einen Klebharzteil (a2) mit zumindest einer Sorte eines Klebharzes, wobei der Klebharzteil (a2) zu mindestens 95 Gew.-% aus mit den Polydien-Blöcken verträglichen und mit den Polyvinylaromaten-Blöcken unverträglichen Kohlenwasserstoffharzen besteht, die ausgewählt sind aus der Gruppe bestehend aus hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5/C_9$- oder Cg-Monomerströmen, Polyterpenharze auf Basis von $\alpha$-Pinen und/oder $\beta$-Pinen und/oder $\delta$-Limonen sowie Mischungen hiervon.

7. Haftklebstreifen nach zumindest einem der vorhergehenden Ansprüche,
**dadurch gekennzeichnet, dass**
der Anteil an Mikroballons bezogen auf die Gesamtklebemasse bei mindestens 1,0 Gew.-% und höchstens 2,0 Gew.-% liegt.

8. Haftklebstreifen nach zumindest einem der vorhergehenden Ansprüche,
**dadurch gekennzeichnet, dass**
die Dicke der zumindest einen geschäumten Haftklebemasseschicht A bei mindestens 25 $\mu$m und höchstens 65 $\mu$m liegt.

9. Haftklebstreifen nach zumindest einem der vorhergehenden Ansprüche,
**dadurch gekennzeichnet, dass**
der zumindest eine Träger B einen Elastomerteil (b1) auf Basis zumindest eine Sorte eines Polyvinylaromaten-Polydien-Blockcopolymers enthält, wobei der Gehalt an Polyvinylaromaten an den Polyvinylaromat-Polydien-Blockcopolymeren bei mindestens 25 Gew.-% und höchstens 35 Gew.-% liegt, innerhalb des Elastomerteils der Anteil an zumindest einem Triblockcopolymer oder Multiblockcopolymer (linear oder radial) bei mindestens 90 Gew.-%, der Anteil an Diblockcopolymeren bei höchstens 18 Gew.-%, bevorzugt bei höchstens 10 Gew.-%, sehr bevorzugt bei 0 Gew.-% liegt und der Anteil an Elastomeren (b1) bezogen auf die Formulierung der Trägerschicht B bei mindestens 45 Gew.-% und höchstens 55 Gew.-% liegt

10. Haftklebstreifen nach zumindest einem der vorhergehenden Ansprüche,
**dadurch gekennzeichnet, dass**
der zumindest eine Träger B einen Elastomerteil (b1) auf Basis zumindest eine Sorte eines Polyvinylaromaten-Polydien-Blockcopolymers, wobei der Elastomerteil (b1) zu mindestens 90 Gew.-% aus Polyvinylaromaten-Polybutadien-Blockcopolymeren und/oder Polyvinylaromaten-Polyisopren-Blockcopolymeren besteht.

11. Haftklebstreifen nach zumindest einem der vorhergehenden Ansprüche,
**dadurch gekennzeichnet, dass**
der zumindest eine Träger B einen Klebharzteil (b2) enthält mit zumindest einer Sorte eines Klebharzes, wobei der Klebharzteil (b2) zu mindestens 95 Gew.-% aus mit den Polydien-Blöcken verträglichen und mit den Polyvinylaromaten-Blöcken unverträglichen Kohlenwasserstoffharzen besteht, die ausgewählt sind aus der Gruppe bestehend aus hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5/C_9$- oder Cg-Monomerströmen, Polyterpenharze auf Basis von $\alpha$-Pinen und/oder $\beta$-Pinen und/oder $\delta$-Limonen sowie Mischungen hiervon.

12. Haftklebstreifen nach zumindest einem der vorhergehenden Ansprüche,
**dadurch gekennzeichnet, dass**

die Dicke der Trägerschicht B bei mindestens 80 $\mu$m und höchstens 120 $\mu$m liegt und/oder
die Trägerschicht B ungeschäumt vorliegt,

13. Haftklebstreifen nach zumindest einem der vorhergehenden Ansprüche,
**dadurch gekennzeichnet, dass**
der Klebharzteil (a2) und der Klebharzteil (b2) chemisch gleich sind.

14. Haftklebstreifen nach zumindest einem der vorhergehenden Ansprüche,
**dadurch gekennzeichnet, dass**
als Haftklebemassen solche auf Basis von Blockcopolymeren enthaltend Polymerblöcke überwiegend gebildet von Vinylaromaten (A-Blöcke), bevorzugt Styrol, und solche überwiegend gebildet durch Polymerisation von 1,3-Dienen (B-Blöcke) wie zum Beispiel Butadien und Isopren oder einem Copolymer aus beidem eingesetzt werden.

**15.** Haftklebstreifen nach zumindest einem der vorhergehenden Ansprüche,
**dadurch gekennzeichnet, dass**
als Vinylaromatenblockcopolymer mindestens ein Synthesekautschuk in Form eines Blockcopolymers mit einem Aufbau A-B, A-B-A, (A-B)$_n$, (A-B)$_n$X oder (A-B-A)$_n$X, worin

- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl $\geq$ 2 stehen.

**16.** Haftklebstreifen nach zumindest einem der vorhergehenden Ansprüche,
**dadurch gekennzeichnet, dass**
die Vinylaromaten zum Aufbau des Blocks A Styrol, $\alpha$-Methylstyrol und/oder andere StyrolDerivate umfassen, besonders bevorzugt Polystyrol.

**17.** Haftklebstreifen nach zumindest einem der vorhergehenden Ansprüche,
**dadurch gekennzeichnet, dass**
das Monomere für den Block B ausgewählt ist aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere.

**18.** Haftklebstreifen nach zumindest einem der vorhergehenden Ansprüche,
**dadurch gekennzeichnet, dass**
der Anteil der Vinylaromatenblockcopolymere, insbesondere Styrolblockcopolymere in Summe bezogen auf die gesamte Haftklebemasse mindestens 40 Gew.-%, vorzugsweise mindestens 45 Gew.-% und gleichzeitig maximal 55 Gew.-% beträgt.

**19.** Haftklebstreifen nach zumindest einem der vorhergehenden Ansprüche,
**dadurch gekennzeichnet, dass**
es sich bei dem Klebharz (a2) zu mindestens 75 Gew.% um Kohlenwasserstoffharze oder Terpenharze oder eine Mischung dergleichen handelt.

**20.** Haftklebstreifen nach zumindest einem der vorhergehenden Ansprüche,
**dadurch gekennzeichnet, dass**
die Klebemasse aus folgender Zusammensetzung besteht:

| | |
|---|---|
| • Vinylaromatenblockcopolymere | 40, vorzugsweise 45 bis 55 Gew.-% |
| • Klebharze und ggf. Weichharze | 40 bis 59,3, vorzugsweise 54,3 Gew.-% |
| • Mikroballons | 0,5 bis 2,5 Gew.-% |
| • Additive | 0,2 bis 10 Gew.-% |

**21.** Haftklebstreifen nach zumindest einem der vorhergehenden Ansprüche,
**dadurch gekennzeichnet, dass**
die absolute Dichte der geschäumten Haftklebemasse beträgt 450 bis 950 kg/m$^3$, insbesondere 600 bis 800 kg/m$^3$ beträgt, und/oder die relative Dichte 0,22 bis 0,99, bevorzugt 0,30 bis 0,90, insbesondere 0,50 bis 0,85.

**22.** Haftklebstreifen nach zumindest einem der vorhergehenden Ansprüche,
**dadurch gekennzeichnet, dass**
die Formulierung für die Trägerschicht aus folgender Zusammensetzung besteht:

| | |
|---|---|
| • Vinylaromatenblockcopolymere | 40 bis 60, vorzugsweise 55 Gew.-% |
| • Klebharze und ggf. Weichharze | 40 bis 59,8, vorzugsweise 54,8 Gew.-% |

(fortgesetzt)

| | |
|---|---|
| • Additive | 0,2 bis 10 Gew.-% |

**23.** Haftklebstreifen nach zumindest einem der vorhergehenden Ansprüche,
**dadurch gekennzeichnet, dass**
der Selbstklebestreifen eine Gesamtdicke (ohne temporäre Trennliner oder Trennfolien) von höchstens 250 $\mu$m, bevorzugt von weniger als 175 $\mu$m aufweist.

**24.** Haftklebstreifen nach zumindest einem der vorhergehenden Ansprüche,
**dadurch gekennzeichnet, dass**
der Träger eine Dicke zwischen 70 bis 150 $\mu$m, bevorzugt zwischen 80 und 120 $\mu$m.

**25.** Verwendung eines Haftklebestreifens nach zumindest einem der vorhergehenden Ansprüche zur Verklebung von Bauteilen wie insbesondere Akkus und elektronischen Geräten wie insbesondere Handys.

**Claims**

**1.** Adhesive strip redetachable without residue or destruction by extensive stretching substantially in the bond plane, comprising at least one layer of adhesive, which is foamed with microballoons, and at least one carrier B, wherein

the pressure-sensitive adhesive A forming the at least one layer of adhesive

comprises an elastomer part (a1) based on at least one kind of a polyvinylaromatic-polydiene block copolymer, where the elastomer part (a1) consists to an extent of at least 90 wt% of polyvinylaromatic-polydiene block copolymers, the polyvinylaromatic content of the polyvinylaromatic-polydiene block copolymers is at least 12 wt% and at most 35 wt%, and the fraction of the elastomer part (a1), based on the overall adhesive A, is at least 40 wt% and at most 55 wt%, and

comprises a tackifying resin part (a2) with at least one kind of a tackifying resin, where the tackifying resin part (a2) consists to an extent of at least 90 wt% of hydrocarbon resins which are compatible with the polydiene blocks and incompatible with the polyvinylaromatic blocks and are selected from the group consisting of hydrogenated and non-hydrogenated polymers of dicyclopentadiene, non-hydrogenated, partly, selectively or fully hydrogenated hydrocarbon resins based on $C_5$, $C_5/C_9$ or $C_9$ monomer streams, polyterpene resins based on $\alpha$-pinene and/or $\beta$-pinene and/or $\delta$-limonene, and also mixtures thereof, and the fraction of the tackifying resin part (a2), based on the overall adhesive A, is at least 40 wt% and at most 60 wt%, and also

optionally comprises a plasticizing resin part (a3), where the plasticizing resin part (a3), based on the overall adhesive, is 0 wt% to at most 5 wt%, and optionally comprises further additives (a4),

where the fraction of microballoons, based on the overall adhesive, is at least 0.5 wt% and at most 2.5 wt%, where the thickness of the at least one foamed layer A of pressure-sensitive adhesive is at least 20 $\mu$m and at most 75 $\mu$m,

and where

the at least one carrier B

comprises an elastomer part (b1) based on at least one kind of a polyvinylaromatic-polydiene block copolymer, where the elastomer part (b1) consists to an extent of at least 90 wt% of polyvinylaromatic-polydiene block copolymers, the polyvinylaromatic content of the polyvinylaromatic-polydiene block copolymers is at least 20 wt% and at most 45 wt%, the fraction, within the elastomer part, of at least one triblock copolymer or multiblock copolymer (linear or radial) is at least 80 wt%, where the molar mass of the triblock copolymer or multiblock copolymer (linear or radial) is at least 85 000 g/mol determined by GPC according to Test II in the description, the fraction of diblock copolymers is below 20 wt%, and the fraction of elastomers (b1), based on the formulation of the carrier layer B, is at least 40 wt% and at most 60 wt%, and

comprises a tackifying resin part (b2) with at least one kind of a tackifying resin, where the tackifying resin part (b2) consists to an extent of at least 90 wt% of hydrocarbon resins which are compatible with the polydiene blocks and incompatible with the polyvinylaromatic blocks and are selected from the group consisting of hydrogenated and non-hydrogenated polymers of dicyclopentadiene, non-hydrogenated, partly, selectively or fully hydrogenated hydrocarbon resins based on $C_5$, $C_5/C_9$ or $C_9$ monomer streams, polyterpene resins based on $\alpha$-pinene and/or $\beta$-pinene and/or $\delta$-limonene, and also mixtures thereof, and the fraction of the tackifying resin part (b2), based on the overall formulation of the carrier layer B, is at least 40 wt% and at most 60 wt%, and also

optionally comprises a plasticizing resin part (b3), where the plasticizing resin fraction (b3), based on the overall formulation of the carrier layer, is 0 wt% to at most 5 wt%,
and
optionally comprises further additives (b4),
where the thickness of the carrier layer B is at least 70 $\mu$m and at most 150 $\mu$m,
where the density of the carrier layer B is at least 950 g/cm$^3$.

2. Adhesive strip according to Claim 1,
   **characterized in that**
   the adhesive strip consists of one or more layers of adhesive, consisting of the pressure-sensitive adhesive A, and of one or more carrier layers B.

3. Adhesive strip according to at least one of Claims 1 to 2,
   **characterized in that**
   the adhesive strip consists exclusively of the layers of adhesive formed from the pressure-sensitive adhesive A and of the carrier layers B.

4. Adhesive strip according to at least one of Claims 1 to 3,
   **characterized in that**

   the pressure-sensitive adhesive A forming the at least one layer of adhesive comprises
   an elastomer part (a1) based on at least one kind of a polyvinylaromatic-polydiene block copolymer, where the elastomer part (a1) consists to an extent of at least 90 wt% of polyvinylaromatic-polydiene block copolymers, the polyvinylaromatic content of the polyvinylaromatic-polydiene block copolymers is at least 20 wt% and at most 32 wt%, and the fraction of the elastomer part (a1), based on the overall adhesive A, is at least 45 wt%.

5. Adhesive strip according to at least one of the preceding claims,
   **characterized in that**
   the elastomer part (a1) consists to an extent of at least 90 wt% of polyvinylaromatic-polybutadiene block copolymers.

6. Adhesive strip according to at least one of the preceding claims,
   **characterized in that**

   the pressure-sensitive adhesive A forming the at least one layer of adhesive comprises
   a tackifying resin part (a2) with at least one kind of a tackifying resin, where the tackifying resin part (a2) consists to an extent of at least 95 wt% of hydrocarbon resins which are compatible with the polydiene blocks and incompatible with the polyvinylaromatic blocks and are selected from the group consisting of hydrogenated and non-hydrogenated polymers of dicyclopentadiene, non-hydrogenated, partly, selectively or fully hydrogenated hydrocarbon resins based on $C_5$, $C_5/C_9$ or $C_9$ monomer streams, polyterpene resins based on $\alpha$-pinene and/or $\beta$-pinene and/or $\delta$-limonene, and also mixtures thereof.

7. Adhesive strip according to at least one of the preceding claims,
   **characterized in that**
   the fraction of microballoons, based on the overall adhesive, is at least 1.0 wt% and at most 2.0 wt%.

8. Adhesive strip according to at least one of the preceding claims,
   **characterized in that**
   the thickness of the at least one foamed layer A of pressure-sensitive adhesive is at least 25 $\mu$m and at most 65 $\mu$m.

9. Adhesive strip according to at least one of the preceding claims,
   **characterized in that**
   the at least one carrier B comprises an elastomer part (b1) based on at least one kind of a polyvinylaromatic-polydiene block copolymer, where the polyvinylaromatic content of the polyvinylaromatic-polydiene block copolymers is at least 25 wt% and at most 35 wt%, the fraction, within the elastomer part, of at least one triblock copolymer or multiblock copolymer (linear or radial) is at least 90 wt%, the fraction of diblock copolymers is at most 18 wt%, preferably at most 10 wt%, very preferably 0 wt%, and the fraction of elastomers (b1), based on the formulation of the carrier layer B, is at least 45 wt% and at most 55 wt%.

**10.** Adhesive strip according to at least one of the preceding claims,
**characterized in that**
the at least one carrier B comprises an elastomer part (b1) based on at least one kind of a polyvinylaromatic-polydiene block copolymer, where the elastomer part (b1) consists to an extent of at least 90 wt% of polyvinylaromatic-polydiene block copolymers and/or polyvinylaromatic-polyisoprene block copolymers.

**11.** Adhesive strip according to at least one of the preceding claims,
**characterized in that**
the at least one carrier B comprises a tackifying resin part (b2) with at least one kind of a tackifying resin, where the tackifying resin part (b2) consists to an extent of at least 95 wt% of hydrocarbon resins which are compatible with the polydiene blocks and incompatible with the polyvinylaromatic blocks and are selected from the group consisting of hydrogenated and non-hydrogenated polymers of dicyclopentadiene, non-hydrogenated, partly, selectively or fully hydrogenated hydrocarbon resins based on $C_5$, $C_5$/$C_9$ or $C_9$ monomer streams, polyterpene resins based on $\alpha$-pinene and/or $\beta$-pinene and/or $\delta$-limonene, and also mixtures thereof.

**12.** Adhesive strip according to at least one of the preceding claims,
**characterized in that**

the thickness of the carrier layer B is at least 80 $\mu$m and at most 120 $\mu$m
and/or
the carrier layer B is unfoamed.

**13.** Adhesive strip according to at least one of the preceding claims,
**characterized in that**
the tackifying resin part (a2) and the tackifying resin part (b2) are chemically identical.

**14.** Adhesive strip according to at least one of the preceding claims,
**characterized in that**
pressure-sensitive adhesives used are those based on block copolymers comprising polymer blocks predominantly formed of vinylaromatics (A blocks), preferably styrene, and those predominantly formed by polymerization of 1,3-dienes (B blocks) such as, for example, butadiene and isoprene or a copolymer of both.

**15.** Adhesive strip according to at least one of the preceding claims,
**characterized in that**
vinylaromatic block copolymer used is at least one synthetic rubber in the form of a block copolymer having a structure A-B, A-B-A, $(A-B)_n$, $(A-B)_n X$ or $(A-B-A)_n X$, in which

- the blocks A independently of one another are a polymer formed by polymerization of at least one vinylaromatic;
- the blocks B independently of one another are a polymer formed by polymerization of conjugated dienes having 4 to 18 carbon atoms and/or isobutylene, or are a partly or fully hydrogenated derivative of such a polymer;
- X is the radical of a coupling reagent or initiator; and
- n is an integer $\geq$ 2.

**16.** Adhesive strip according to at least one of the preceding claims,
**characterized in that**
the vinylaromatics for synthesizing the block A comprise styrene, $\alpha$-methylstyrene and/or other styrene derivatives, more preferably polystyrene.

**17.** Adhesive strip according to at least one of the preceding claims,
**characterized in that**
the monomer for the block B is selected from the group consisting of butadiene, isoprene, ethylbutadiene, phenylbutadiene, piperylene, pentadiene, hexadiene, ethylhexadiene and dimethylbutadiene and also any desired mixtures of these monomers.

**18.** Adhesive strip according to at least one of the preceding claims,
**characterized in that**
the fraction of the vinylaromatic block copolymers, especially styrene block copolymers, in total, based on the overall pressure-sensitive adhesive, is at least 40 wt%, preferably at least 45 wt% and at the same time not more than 55 wt%.

**19.** Adhesive strip according to at least one of the preceding claims,
**characterized in that**
the tackifying resin (a2) to an extent of at least 75 wt% comprises hydrocarbon resins or terpene resins or a mixture of the same.

**20.** Adhesive strip according to at least one of the preceding claims,
**characterized in that**
the adhesive consists of the following composition:

- Vinylaromatic block copolymers: 40, preferably 45 to 55 wt%
- Tackifying resins and optionally plasticizing resins: 40 to 59.3, preferably 54.3 wt%
- Microballoons: 0.5 to 2.5 wt%
- Additives: 0.2 to 10 wt%

**21.** Adhesive strip according to at least one of the preceding claims,
**characterized in that**
the absolute density of the foamed pressure-sensitive adhesive is 450 to 950 kg/m3, more particularly 600 to 800 kg/m$^3$, and/or the relative density is 0.22 to 0.99, preferably 0.30 to 0.90, more particularly 0.50 to 0.85.

**22.** Adhesive strip according to at least one of the preceding claims,
**characterized in that**
the formulation for the carrier layer consists of the following composition:

- Vinylaromatic block copolymers: 40 to 60, preferably 55 wt%
- Tackifying resins and optionally plasticizing resins: 40 to 59.8, preferably 54.8 wt%
- Additives: 0.2 to 10 wt%

**23.** Adhesive strip according to at least one of the preceding claims,
**characterized in that**
the self-adhesive strip has an overall thickness (without temporary release liners or release films) of at most 250 $\mu$m, preferably of less than 175 $\mu$m.

**24.** Adhesive strip according to at least one of the preceding claims,
**characterized in that**
the carrier has a thickness of between 70 to 150 $\mu$m, preferably between 80 and 120 $\mu$m.

**25.** Use of an adhesive strip according to at least one of the preceding claims for the bonding of components such as, in particular, batteries and electronic devices such as, in particular, mobile phones.

**Revendications**

**1.** Ruban autoadhésif qui peut être de nouveau décollé par étirage avec allongement sensiblement dans le plan de collage, sans résidus et sans dégradation, contenant au moins une couche de masse adhésive qui est moussée par des microballons et au moins un support B,

la masse autoadhésive A formant ladite au moins une couche de masse adhésive contenant
une partie d'élastomère (a1) à base d'au moins un type de copolymère à blocs de poly(aromatiques de vinyle)-polydiène, la partie d'élastomère (a1) étant constituée à raison d'au moins 90% en poids de copolymères à blocs de poly(aromatiques de vinyle)-polydiène, la teneur en poly(aromatiques de vinyle) dans les copolymères à blocs de poly(aromatiques de vinyle)-polydiène étant d'au moins 12% en poids et d'au plus 35% en poids et la proportion de la partie d'élastomère (a1) par rapport à la masse adhésive totale A étant d'au moins 40% en poids et d'au plus 55% en poids et
une partie de résine adhésive (a2) présentant au moins un type de résine adhésive, la partie de résine adhésive (a2) étant constituée à raison d'au moins 90% en poids de résines hydrocarbonées compatibles avec les blocs de polydiène et incompatibles avec les blocs de poly(aromatiques de vinyle), lesquelles résines hydrocarbonées sont choisies dans le groupe constitué par les polymères hydrogénés et non hydrogénés du cyclopentadiène, les résines hydrocarbonées non hydrogénées, partiellement hydrogénées, sélectivement hydrogénées ou complètement hydrogénées à base de flux de monomères en $C_5$, en $C_5/C_9$ ou en $C_9$, les résines polyterpéniques à base d'a-pinène et/ou de β-pinène et/ou de δ-limonène ainsi que leurs mélanges et la proportion de la partie de résine adhésive (a2) par rapport à la masse adhésive totale A étant d'au moins 40% en poids et d'au plus 60% en poids, ainsi que

éventuellement une partie de résine souple (a3), la partie de résine souple (a3), par rapport à la masse adhésive totale, étant de 0% en poids à au plus 5% en poids et

éventuellement d'autres additifs (a4),

la proportion de microballons par rapport à la masse adhésive totale étant d'au moins 0,5% en poids et d'au plus 2,5% en poids,

l'épaisseur de ladite au moins une couche de masse autoadhésive moussée A étant d'au moins 20 μm et d'au plus 75 μm et

ledit au moins un support B contenant

une partie d'élastomère (b1) à base d'au moins un type de copolymère à blocs de poly(aromatiques de vinyle)-polydiène, la partie d'élastomère (b1) étant constituée à raison d'au moins 90% en poids de copolymères à blocs de poly(aromatiques de vinyle)-polydiène, la teneur en poly(aromatiques de vinyle) dans le copolymère à blocs de poly(aromatiques de vinyle)-polydiène étant d'au moins 20% en poids et d'au plus 45% en poids, dans la partie d'élastomère, la proportion d'au moins un copolymère à trois blocs ou d'au moins un copolymère à blocs multiples (linéaire ou radial) étant d'au moins 80% en poids, la masse molaire du copolymère à trois blocs ou du copolymère à blocs multiples (linéaire ou radial), déterminée par CPG selon le test II de la description, étant d'au moins 85.000 g/mole,

la proportion de copolymères à deux blocs étant inférieure à 20% en poids et la proportion d'élastomères (b1) par rapport à la formulation de la couche support B étant d'au moins 40% en poids et d'au plus 60% en poids et

une partie de résine adhésive (b2) présentant au moins un type de résine adhésive, la partie de résine adhésive (b2) étant constituée à raison d'au moins 90% en poids de résines hydrocarbonées compatibles avec les blocs de polydiène et incompatibles avec les blocs de poly(aromatiques de vinyle), lesquelles résines hydrocarbonées sont choisies dans le groupe constitué par les polymères hydrogénés et non hydrogénés du cyclopentadiène, les résines hydrocarbonées non hydrogénées, partiellement hydrogénées, sélectivement hydrogénées ou complètement hydrogénées à base de flux de monomères en $C_5$, en $C_5/C_9$ ou en $C_9$, les résines polyterpéniques à base d'a-pinène et/ou de β-pinène et/ou de δ-limonène ainsi que leurs mélanges et la proportion de la partie de résine adhésive (b2) par rapport à la formulation totale de la couche support B étant d'au moins 40% en poids et d'au plus 60% en poids, ainsi que éventuellement une partie de résine souple (b3), la proportion de résine souple (b3) par rapport à la formulation totale de la couche support étant de 0% en poids à au plus 5% en poids et éventuellement d'autres additifs (b4),

l'épaisseur de la couche support B étant d'au moins 70 μm et d'au plus 150 μm, la densité de la couche support B étant d'au moins 950 g/cm$^3$.

2. Ruban autoadhésif selon la revendication 1, **caractérisé en ce que** le ruban autoadhésif est constitué par une ou plusieurs couches de masse adhésive constituée(s) par la masse autoadhésive A et par une ou plusieurs couches support B.

3. Ruban autoadhésif selon au moins l'une quelconque des revendications 1 à 2, **caractérisé en ce que** le ruban autoadhésif est constitué exclusivement par les couches de masse adhésive constituées par la masse autoadhésive A et par les couches support B.

4. Ruban autoadhésif selon au moins l'une quelconque des revendications 1 à 3, **caractérisé en ce que** la masse autoadhésive A formant ladite au moins une couche de masse adhésive contient

une partie d'élastomère (a1) à base d'au moins un type de copolymère à blocs de poly(aromatiques de vinyle)-polydiène, la partie d'élastomère (a1) étant constituée à raison d'au moins 90% en poids de copolymères à blocs de poly(aromatiques de vinyle)-polydiène, la teneur en poly(aromatiques de vinyle) dans le copolymère à blocs de poly(aromatiques de vinyle)-polydiène étant d'au moins 20% en poids et d'au plus 32% en poids et la proportion de la partie d'élastomère (a1) par rapport à la masse adhésive totale A étant d'au moins 45% en poids.

5. Ruban autoadhésif selon au moins l'une quelconque des revendications précédentes, **caractérisé en ce que** la partie d'élastomère (a1) est constituée à raison d'au moins 90% en poids de copolymères à blocs de poly(aromatiques de vinyle)-polybutadiène.

6. Ruban autoadhésif selon au moins l'une quelconque des revendications précédentes, **caractérisé en ce que** la masse autoadhésive A formant ladite au moins une couche de masse adhésive contient

une partie de résine adhésive (a2) présentant au moins un type de résine adhésive, la partie de résine adhésive (a2) étant constituée à raison d'au moins 95% en poids de résines hydrocarbonées compatibles avec les blocs de polydiène et incompatibles avec les blocs de poly(aromatiques de vinyle), lesquelles résines hydrocarbonées sont choisies dans le groupe constitué par les polymères hydrogénés et non hydrogénés du cyclopentadiène, les résines hydrocarbonées non hydrogénées, partiellement hydrogénées, sélectivement hydrogénées ou complètement hydrogénées à base de flux de monomères en $C_5$, en $C_5/C_9$ ou en $C_9$, les résines polyterpéniques à base d'a-pinène et/ou de β-pinène et/ou de δ-limonène ainsi que leurs mélanges.

7. Ruban autoadhésif selon au moins l'une quelconque des revendications précédentes, **caractérisé en ce que** la proportion de microballons, par rapport à la masse adhésive totale, est d'au moins 1,0% en poids et d'au plus 2,0% en poids.

8. Ruban autoadhésif selon au moins l'une quelconque des revendications précédentes, **caractérisé en ce que** l'épaisseur de ladite au moins une couche de masse autoadhésive moussée A est d'au moins 25 μm et d'au plus 65 μm.

9. Ruban autoadhésif selon au moins l'une quelconque des revendications précédentes, **caractérisé en ce que** ledit au moins un support B contient une partie d'élastomère (b1) à base d'au moins un type de copolymère à blocs de poly(aromatiques de vinyle)-polydiène, la teneur en poly(aromatiques de vinyle) dans les copolymères à blocs de poly(aromatiques de vinyle)-polydiène étant d'au moins 25% en poids et d'au plus 35% en poids, dans la partie d'élastomère, la proportion d'au moins un copolymère à trois blocs ou d'au moins un copolymère à blocs multiples (linéaire ou radial) étant d'au moins 90% en poids, la proportion de copolymères à deux blocs étant d'au plus 18% en poids, de préférence d'au plus 10% en poids, très préférablement de 0% en poids et la proportion d'élastomères (b1), par rapport à la formulation de la couche support B étant d'au moins 45% en poids et d'au plus 55% en poids.

10. Ruban autoadhésif selon au moins l'une quelconque des revendications précédentes, **caractérisé en ce que** ledit au moins un support B contient une partie d'élastomère (b1) à base d'au moins un type de copolymère à blocs de poly(aromatiques de vinyle)-polydiène, la partie d'élastomère (b1) étant constituée à raison d'au moins 90% en poids de copolymères à blocs de poly(aromatiques de vinyle)-polybutadiène et/ou de copolymères à blocs de poly(aromatiques de vinyle)-polyisoprène.

11. Ruban autoadhésif selon au moins l'une quelconque des revendications précédentes, **caractérisé en ce que** ledit au moins un support B contient une partie de résine adhésive (b2) présentant au moins un type de résine adhésive, la partie de résine adhésive (b2) étant constituée à raison d'au moins 95% en poids de résines hydrocarbonées compatibles avec les blocs de polydiène et incompatibles avec les blocs de poly(aromatiques de vinyle), lesquelles résines hydrocarbonées sont choisies dans le groupe constitué par les polymères hydrogénés et non hydrogénés du cyclopentadiène, les résines hydrocarbonées non hydrogénées, partiellement hydrogénées, sélectivement hydrogénées ou complètement hydrogénées à base de flux de monomères en $C_5$, en $C_5/C_9$ ou en $C_9$, les résines polyterpéniques à base d'a-pinène et/ou de β-pinène et/ou de δ-limonène ainsi que leurs mélanges.

12. Ruban autoadhésif selon au moins l'une quelconque des revendications précédentes, **caractérisé en ce que** l'épaisseur de la couche support B est d'au moins 80 μm et d'au plus 120 μm et/ou
la couche support se trouve sous forme non moussée.

13. Ruban autoadhésif selon au moins l'une quelconque des revendications précédentes, **caractérisé en ce que** la partie de résine adhésive (a2) et la partie de résine adhésive (b2) sont chimiquement identiques.

14. Ruban autoadhésif selon au moins l'une quelconque des revendications précédentes, **caractérisé en ce qu'**on utilise, comme masses autoadhésives, des masses à base de copolymères à blocs contenant des blocs polymères principalement formés d'aromatiques de vinyle (blocs A), de préférence de styrène, et des blocs polymères formés principalement par polymérisation de 1,3-diènes (blocs B), tels que par exemple le butadiène ou l'isoprène ou un copolymère des deux.

15. Ruban autoadhésif selon au moins l'une quelconque des revendications précédentes, **caractérisé en ce qu'**on utilise, comme copolymère à blocs d'aromatiques de vinyle, au moins un caoutchouc de synthèse sous forme d'un copolymère à blocs présentant une structure A-B, A-B-A, $(A\text{-}B)_n$, $(A\text{-}B)_nX$ ou $(A\text{-}B\text{-}A)_nX$, dans laquelle

  - les blocs A représentent, indépendamment les uns des autres, un polymère formé par polymérisation d'au moins un aromatique de vinyle ;
- les blocs B représentent, indépendamment les uns des autres, un polymère formé par polymérisation de diènes conjugués comprenant 4 à 18 atomes de carbone et/ou d'isobutylène ou un dérivé partiellement ou complètement hydrogéné d'un tel polymère ;
- X représente le radical d'un réactif de couplage ou d'un initiateur et
- n représente un nombre entier $\geq 2$.

16. Ruban autoadhésif selon au moins l'une quelconque des revendications précédentes, **caractérisé en ce que** les aromatiques de vinyle pour la formation du bloc A comprennent le styrène, l'$\alpha$-méthylstyrène et/ou d'autres dérivés du styrène, de manière particulièrement préférée le polystyrène.

17. Ruban autoadhésif selon au moins l'une quelconque des revendications précédentes, **caractérisé en ce que** le monomère pour le bloc B est choisi dans le groupe constitué par le butadiène, l'isoprène, l'éthylbutadiène, le phénylbutadiène, le pipérylène, le pentadiène, l'hexadiène, l'éthylhexadiène et le diméthylbutadiène ainsi que les mélanges quelconques de ces monomères.

18. Ruban autoadhésif selon au moins l'une quelconque des revendications précédentes, **caractérisé en ce que** la proportion de copolymères à blocs d'aromatiques de vinyle, en particulier de copolymères à blocs de styrène, représente au total, par rapport à la totalité de la masse autoadhésive, au moins 40% en poids, de préférence au moins 45% en poids et simultanément au maximum 55% en poids.

19. Ruban autoadhésif selon au moins l'une quelconque des revendications précédentes, **caractérisé en ce qu'**il s'agit, pour la résine adhésive (a2) à raison d'au moins 75% en poids de résines hydrocarbonées ou de résines terpéniques ou d'un mélange de celles-ci.

20. Ruban autoadhésif selon au moins l'une quelconque des revendications précédentes, **caractérisé en ce que** la masse adhésive est constituée par la composition suivante :

   • copolymères à blocs d'aromatiques vinyle : 40, de préférence 45 à 55% en poids
   • résines adhésives et le cas échéant résines souples : 40 à 59,3, de préférence 54,3% en poids,
   • microballons : 0,5 à 2,5% en poids
   • additifs :0,2 à 10% en poids.

21. Ruban autoadhésif selon au moins l'une quelconque des revendications précédentes, **caractérisé en ce que** la densité absolue de la masse autoadhésive moussée est de 450 à 950 kg/m$^3$, en particulier de 600 à 800 kg/m$^3$, et/ou la densité relative est de 0,22 à 0,99, de préférence de 0,30 à 0,90, en particulier de 0,50 à 0,85.

22. Ruban autoadhésif selon au moins l'une quelconque des revendications précédentes, **caractérisé en ce que** la formulation pour la couche support est constituée par la composition suivante :

   • copolymères à blocs d'aromatiques vinyle : 40 à 60, de préférence 55% en poids,
   • résines adhésives et le cas échéant résines souples : 40 à 59,8, de préférence 54,8% en poids,
   • additifs : 0,2 à 10% en poids.

23. Ruban autoadhésif selon au moins l'une quelconque des revendications précédentes, **caractérisé en ce que** le ruban autoadhésif présente une épaisseur totale (sans revêtement ni feuilles de séparation temporaires) d'au plus 250 $\mu$m, de préférence de moins de 175 $\mu$m.

24. Ruban autoadhésif selon au moins l'une quelconque des revendications précédentes, **caractérisé en ce que** le support présente une épaisseur entre 70 et 150 micromètres, de préférence entre 80 et 120 micromètres.

25. Utilisation d'un ruban autoadhésif selon au moins l'une quelconque des revendications précédentes pour le collage de composants, tels qu'en particulier des accumulateurs, et d'appareils électroniques, tels qu'en particulier les téléphones portables.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4024312 A
- DE 3331016 C2
- WO 9211332 A1
- WO 9211333 A1
- DE 4222849 C1
- WO 9506691 A1
- DE 19531696 A1
- DE 19626870 A1
- DE 19649727 A1
- DE 19649728 A1
- DE 19649729 A1
- DE 19708364 A1
- DE 19720145 A1
- DE 19820858 A1
- WO 9937729 A1
- DE 10003318 A1
- EP 0816459 A
- DE 4233872 C1
- DE 19511288 C1
- US 5507464 B1
- US 5672402 B1
- WO 9421157 A1
- DE 4428587 C1
- DE 4431914 C1
- WO 9707172 A1
- DE 19627400 A1
- WO 9803601 A1
- DE 19649636 A1
- DE 19720526 A1
- DE 19723177 A1
- DE 19723198 A1
- DE 19726375 A1
- DE 19756084 C1
- DE 19756816 A1
- DE 19842864 A1
- DE 19842865 A1
- WO 9931193 A1
- WO 9963018 A1
- WO 0012644 A1
- DE 19938693 A1
- WO 2010141248 A1
- DE 19708366 A1
- DE 10129608 A1
- DE 10129608
- DE 10252088 A1
- DE 10252089 A1
- DE 102012223670 A1
- DE 102015206076 A1
- EP 0257984 A1
- DE 3537433 A1
- WO 9531225 A1
- EP 0693097 A1
- WO 9818878 A1
- US 4885170 A
- EP 1102809 B

**In der Beschreibung aufgeführte Nicht-Patentliteratur**

- *CHEMICAL ABSTRACTS,* 1330-20-7
- *CHEMICAL ABSTRACTS,* 123-42-2
- *CHEMICAL ABSTRACTS,* 62-53-3
- *CHEMICAL ABSTRACTS,* 108-87-2